(19) Europäisches Patentamt / European Patent Office / Office européen des brevets

(11) **EP 4 013 058 B1**

(12) **EUROPEAN PATENT SPECIFICATION**

(45) Date of publication and mention
of the grant of the patent:
**02.07.2025 Bulletin 2025/27**

(21) Application number: **20855920.3**

(22) Date of filing: **27.08.2020**

(51) International Patent Classification (IPC):
$H04N\ 19/61^{(2014.01)}$   $H04N\ 19/70^{(2014.01)}$
$H04N\ 19/186^{(2014.01)}$   $H04N\ 19/184^{(2014.01)}$
$H04N\ 19/132^{(2014.01)}$   $H04N\ 19/137^{(2014.01)}$
$H04N\ 19/124^{(2014.01)}$

(52) Cooperative Patent Classification (CPC):
H04N 19/70; H04N 19/105; H04N 19/157;
H04N 19/176; H04N 19/186; H04N 19/593

(86) International application number:
**PCT/KR2020/011480**

(87) International publication number:
**WO 2021/040430 (04.03.2021 Gazette 2021/09)**

(54) **VIDEO ENCODING AND DECODING USING DIFFERENTIAL CODING**

VIDEOCODIERUNG UND -DECODIERUNG MITTELS DIFFERENZIELLER CODIERUNG

CODAGE ET DÉCODAGE VIDÉO EN UTILISANT LE CODAGE DIFFÉRENTIEL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **27.08.2019 KR 20190104914
15.01.2020 KR 20200005127**

(43) Date of publication of application:
**15.06.2022 Bulletin 2022/24**

(73) Proprietors:
  • **HYUNDAI MOTOR COMPANY**
    **Seoul 06797 (KR)**
  • **Kia Corporation**
    **Seocho-gu**
    **Seoul 06797 (KR)**
  • **Ewha University-Industry Collaboration**
    **Foundation**
    **Seoul 03760 (KR)**

(72) Inventors:
  • **KANG, Je Won**
    **Seoul 04069 (KR)**
  • **PARK, Seung Wook**
    **Yongin-si Gyeonggi-do 16803 (KR)**
  • **LIM, Wha Pyeong**
    **Hwaseong-si Gyeonggi-do 18271 (KR)**

(74) Representative: **Isarpatent**
**Patent- und Rechtsanwälte Barth**
**Charles Hassa Peckmann & Partner mbB**
**Friedrichstrasse 31**
**80801 München (DE)**

(56) References cited:
**KR-A- 20140 042 899    KR-A- 20140 089 583**

  • **HENRY (ORANGE) F ET AL: "CE8-related:
    BDPCM for chroma", no. JVET-O0166 ; m48259,
    25 June 2019 (2019-06-25), XP030218748,
    Retrieved from the Internet <URL:http://phenix.
    int-evry.fr/jvet/doc_end_user/documents/
    15_Gothenburg/wg11/JVET-O0166-v1.zip JVET-
    O0166/JVET-O0166DraftText.docx> [retrieved on
    20190625]**
  • **YOO (LGE) S ET AL: "CE8-related : Unified
    condition between BDPCM and transform skip",
    no. JVET-O0206 ; m48315, 25 June 2019
    (2019-06-25), XP030218844, Retrieved from the
    Internet <URL:http://phenix.int-evry.fr/jvet/
    doc_end_user/documents/15_Gothenburg/
    wg11/JVET-O0206-v1.zip JVET-O0206_v1.docx>
    [retrieved on 20190625]**

- GORDON CLARE ET AL: "CE8-related: BDPCM for chroma", no. JVET-O0166; JVET-O0166 ; m48259, 25 June 2019 (2019-06-25), pages 1 - 4, XP030218747, Retrieved from the Internet <URL:http://phenix.int-evry.fr/jvet/doc_end_user/documents/15_Gothenburg/wg11/JVET-O0166-v1.zip JVET-O0166/JVET-O0166.docx> [retrieved on 20190625]
- BENJAMIN BROSS , JIANLE CHEN , SHAN LIU: "Versatile Video Coding (Draft 6)", 127. MPEG MEETING; 20190708 - 20190712; GOTHENBURG; (MOTION PICTURE EXPERT GROUP OR ISO/IEC JTC1/SC29/WG11), GOTHENBURG SE, no. JVET-O2001-VE, 31 July 2019 (2019-07-31), Gothenburg SE, pages 1 - 455, XP030208568
- JIANLE CHEN , YAN YE , SEUNG HWAN KIM: "Algorithm description for Versatile Video Coding and Test Model 5 (VTM 5)", 14. JVET MEETING; 20190319 - 20190327; GENEVA; (THE JOINT VIDEO EXPLORATION TEAM OF ISO/IEC JTC1/SC29/WG11 AND ITU-T SG.16 ), 11 June 2019 (2019-06-11), pages 1 - 76, XP030205562
- J. BOYCE (INTEL): "BoG report on general high level syntax", 14. JVET MEETING; 20190319 - 20190327; GENEVA; (THE JOINT VIDEO EXPLORATION TEAM OF ISO/IEC JTC1/SC29/WG11 AND ITU-T SG.16 ), 27 March 2019 (2019-03-27), XP030205117

**Description**

TECHNICAL FIELD

The present disclosure relates to video encoding and decoding. More particularly, the present disclosure relates to video encoding and decoding using a differential encoding technique performed in a transfer skip mode.

BACKGROUND

Since the volume of video data is larger than that of voice data or still image data, storing or transmitting video data without processing for compression requires a lot of hardware resources including memory.

Accordingly, in storing or transmitting video data, the video data is generally compressed using an encoder so as to be stored or transmitted. Then, a decoder receives the compressed video data, and decompresses and reproduces the video data. Compression techniques for such video include H.264/AVC and High Efficiency Video Coding (HEVC), which improves coding efficiency over H.264/AVC by about 40%.

However, the size and resolution and frame rate of pictures constituting a video are increasing more and more, and therefore the amount of data to be encoded is also increasing, which brings out the need for a new compression technology that has better encoding efficiency and greatly improves picture quality.

Henry et al: "CE8-related: BDPCM for chroma" disclose applying BDPCM to chroma components. Yoo S. et al.: "CE8-related: Unified condition between BDPCM and transform skip" discloses that in the current VVC, the BDPCM enabling condition depends on only block size (i.e., width <= 32 && height <= 32). Considering that the BDPCM is applied on only the transform - skipped residual blocks and the transform skip is able to be restricted less than 32, it is possible for the current spec text to allow the BDPCM when the transform skip is not enabled. Therefore, in this article a unified enabling condition between the BDPCM and the transform skip is described.

SUMMARY

[Technical Problem]

The present disclosure provides a video encoding and decoding technology that uses a differential coding technique for a residual signal in order to enhance compression performance in a transform skip mode. The invention is set out in the appended set of claims.

[Technical Solution]

In accordance with one aspect of the present disclosure, a method is provided for decoding a bitstream generated by encoding a video sequence of a plurality of pictures. The method comprises: decoding, from a sequence parameter set of the bitstream, information on a chroma sampling format and high-level syntax elements related to differential encoding of residual signals, the high-level syntax elements comprising a single common control flag indicating whether the differential encoding is enabled for the residual signals of each of luma and chroma components of the video sequence, and information on a maximum block size allowed for the differential encoding; if a target block to be currently decoded satisfies conditions defined by the information on the chroma sampling format and the high-level syntax elements, decoding a first chroma syntax element indicating whether the differential encoding is applied to a chroma block corresponding to the target block or not, and decoding a second chroma syntax element indicating a differential encoding direction applied to the chroma block based on the first chroma syntax element; reconstructing a residual block of the chroma block from the bitstream; and reconstructing the chroma block by modifying the residual signals within the residual block according to the differential encoding direction indicated by the second chroma syntax element.

In accordance with another aspect of the present disclosure, an apparatus is provided for decoding a bitstream with an encoded video sequence of a plurality of pictures. The apparatus comprises a decoder configure to extract information from the bitstream, and a reconstructor configured to reconstruct a target block to be currently decoded based on the extracted information. The decoder is configured to: decode, from a sequence parameter set of the bitstream, high-level syntax elements comprising a single common control flag indicating whether differential encoding is enabled for residual signals of each of luma and chroma components of the video sequence, and information on a maximum block size allowed for the differential encoding, decode information on a chroma sampling format from the sequence parameter set, and if the target block satisfies conditions defined by the high-level syntax elements and the information on the chroma sampling format, decode a first chroma syntax element indicating whether the differential encoding is applied to a chroma block corresponding to the target block or not, and decode a second chroma syntax element indicating a differential encoding direction applied to the chroma block based on the first chroma syntax element, and reconstruct a residual block of the chroma block from the bitstream. When the first chroma syntax element indicates that differential encoding is applied to the chroma block, the reconstructor is configured to reconstruct the chroma block by modifying the residual signals within the residual block according to the differential encoding direction indicated by the second chroma syntax element.

In accordance with another aspect of the present disclosure, a method is provided for encoding a video sequence of a plurality of pictures. The method comprises: encoding, to a sequence parameter set of the bitstream, information on a chroma sampling format and high-level syntax elements related to differential encoding of residual signals, the high-level syntax elements comprising a single common control flag indicating whether the differential encoding is enabled for the residual signals of each of luma and chroma components of the video sequence, and information on a maximum block size allowed for the differential encoding; if a target block to be currently decoded satisfies conditions defined by the information on the chroma sampling format and the high-level syntax elements, encoding a first chroma syntax element indicating whether the differential encoding is applied to a chroma block corresponding to the target block or not, and encoding a second chroma syntax element indicating a differential encoding direction applied to the chroma block based on the first chroma syntax element; and if the first chroma syntax element indicates that the differential encoding is applied to the chroma block, differentially encoding the residual signals for the chroma block according to the differential encoding direction indicated by the second chroma syntax element.

## BRIEF DESCRIPTION OF THE DRAWINGS

FIG. 1 is an exemplary block diagram of a video encoding apparatus capable of implementing the techniques of the present disclosure.
FIG. 2 is a diagram illustrating block splitting using a QTBTTT structure.
FIG. 3 is a diagram illustrating a plurality of intra-prediction modes.
FIG. 4 is an exemplary block diagram of a video decoding apparatus capable of implementing the techniques of the present disclosure.
FIG. 5 is an exemplary view illustrating a type in which a current block is partitioned into a plurality of subblocks.
FIG. 6 is an exemplary view for explaining a differential encoding technique according to the present disclosure.
FIG. 7 is an exemplary view for explaining block partitioning which serves for satisfying a restriction on block size in differential encoding.
FIG. 8 is a flow chart for explaining a method for encoding a video sequence using a differential encoding technique according to an embodiment of the present disclosure.
FIG. 9 is a flow chart for explaining a method for decoding a video sequence using a differential encoding technique according to an embodiment of the present disclosure.

## DESCRIPTION OF EXEMPLARY EMBODIMENTS

Hereinafter, some embodiments of the present disclosure will be described in detail with reference to the accompanying drawings. It should be noted that, in assigning reference numerals to the constituent elements in the respective drawings, like reference numerals designate like elements, although the elements are shown in different drawings. Further, in the following description of the present disclosure, a detailed description of known functions and configurations incorporated herein will be omitted to avoid obscuring the subject matter of the present disclosure.

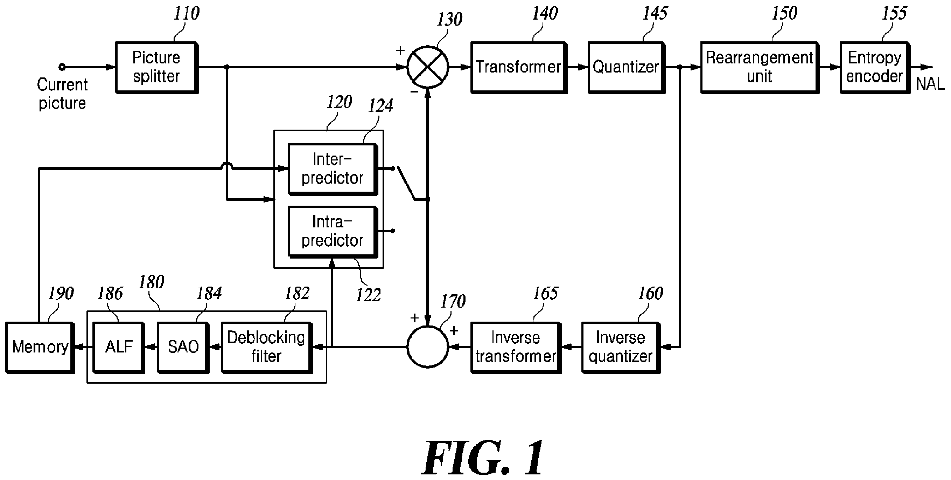

FIG. 1 is an exemplary block diagram of a video encoding apparatus capable of implementing the techniques of the present disclosure. Hereinafter, a video encoding apparatus and elements of the apparatus will be described with reference to FIG. 1.

The video encoding apparatus includes a picture splitter 110, a predictor 120, a subtractor 130, a transformer 140, a quantizer 145, a reorganizer 150, an entropy encoder 155, an inverse quantizer 160, an inverse transformer 165, an adder 170, a loop filter unit 180, and a memory 190.

Each element of the video encoding apparatus may be implemented in hardware or software, or a combination of hardware and software. The functions of the respective elements may be implemented as software, and a microprocessor may be implemented to execute the software functions corresponding to the respective elements.

One video includes a plurality of pictures. Each picture is split into a plurality of regions, and encoding is performed on each region. For example, one picture is split into one or more tiles and/or slices. Here, the one or more tiles may be defined as a tile group. Each tile or slice is split into one or more coding tree units (CTUs). Each CTU is split into one or more coding units (CUs) by a tree structure. Information applied to each CU is encoded as a syntax of the CU, and information applied to CUs included in one CTU in common is encoded as a syntax of the CTU. In addition, information applied to all blocks in one slice in common is encoded as a syntax of a slice header, and information applied to all blocks constituting one or more pictures is encoded in a picture parameter set (PPS) or a picture header. Furthermore, information which a sequence composed of a plurality of pictures refers to in common is encoded in a sequence parameter set (SPS). Information applied to one tile or tile group in common may be encoded as a syntax of a tile or tile group header.

The picture splitter 110 determines the size of a coding tree unit (CTU). Information about the size of the CTU (CTU size) is encoded as a syntax of the SPS or PPS and is transmitted to the video decoding apparatus.

The picture splitter 110 splits each picture constituting the video into a plurality of CTUs having a predetermined size, and then recursively splits the CTUs using a tree structure. In the tree structure, a leaf node serves as a coding unit (CU), which is a basic unit of coding.

The tree structure may be a QuadTree (QT), in which a node (or parent node) is split into four sub-nodes (or child nodes) of the same size, a BinaryTree (BT), in which a node is split into two sub-nodes, a TernaryTree (TT), in which a node is split into three sub-nodes at a ratio of 1:2:1, or a structure formed by a combination of two or more of the QT structure, the BT structure, and the TT structure. For example, a QuadTree plus BinaryTree (QTBT) structure may be used, or a QuadTree plus BinaryTree TernaryTree (QTBTTT) structure may be used. Here, BTTT may be collectively referred to as a multiple-type tree (MTT).

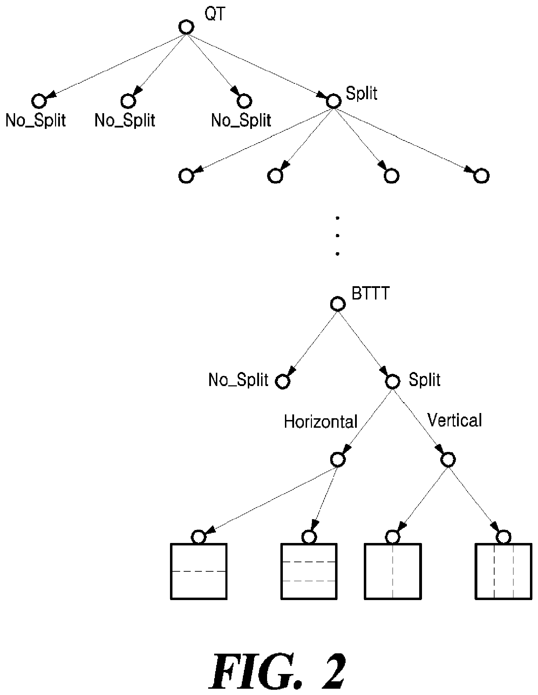

FIG. 2 exemplarily shows a QTBTTT splitting tree structure. As shown in FIG. 2, a CTU may be initially split in the QT structure. The QT splitting may be repeated until the size of the splitting block reaches the minimum block size MinQTSize of a leaf node allowed in the QT. A first flag (QT_split_flag) indicating whether each node of the QT structure is split into four nodes of a lower layer is encoded by the entropy encoder 155 and signaled to the video decoding apparatus. When the leaf node of the QT is not larger than the maximum block size (MaxBTSize) of the root node allowed in the BT, it may be further split into one or more of the BT structure or the TT structure. The BT structure and/or the TT structure may have a plurality of splitting directions. For example, there may be two directions, namely, a direction in which a block of a node is horizontally split and a direction in which the block is vertically split. As shown in FIG. 2, when MTT splitting is started, a second flag (mtt_split_flag) indicating whether nodes are split, a flag indicating a splitting direction (vertical or horizontal) in the case of splitting, and/or a flag indicating a splitting type (Binary or Ternary) are encoded by the entropy encoder 155 and signaled to the video decoding apparatus. Alternatively, prior to encoding the first flag (QT_split_flag) indicating whether each node is split into 4 nodes of a lower layer, a CU splitting flag (split_cu_flag) indicating whether the node is split may be encoded. When the value of the CU split flag (split_cu_flag) indicates that splitting is not performed, the block of the node becomes a leaf node in the splitting tree structure and serves a coding unit (CU), which is a basic unit of encoding. When the value of the CU split flag (split_cu_flag) indicates that splitting is performed, the video encoding apparatus starts encoding the flags in the manner described above, starting with the first flag.

When QTBT is used as another example of a tree structure, there may be two splitting types, which are a type of horizontally splitting a block into two blocks of the same size (i.e., symmetric horizontal splitting) and a type of vertically splitting a block into two blocks of the same size (i.e., symmetric vertical splitting). A split flag (split_flag) indicating whether each node of the BT structure is split into block of a lower layer and splitting type information indicating the splitting type are encoded by the entropy encoder 155 and transmitted to the video decoding apparatus. There may be an additional type of splitting a block of a node into two asymmetric blocks. The asymmetric splitting type may include a type of splitting a block into two rectangular blocks at a size ratio of 1:3, or a type of diagonally splitting a block of a node.

CUs may have various sizes according to QTBT or QTBTTT splitting of a CTU. Hereinafter, a block corresponding to a CU (i.e., a leaf node of QTBTTT) to be encoded or decoded is referred to as a "current block." As QTBTTT splitting is employed, the shape of the current block may be square or rectangular.

The predictor 120 predicts the current block to generate a prediction block. The predictor 120 includes an intra-predictor 122 and an inter-predictor 124.

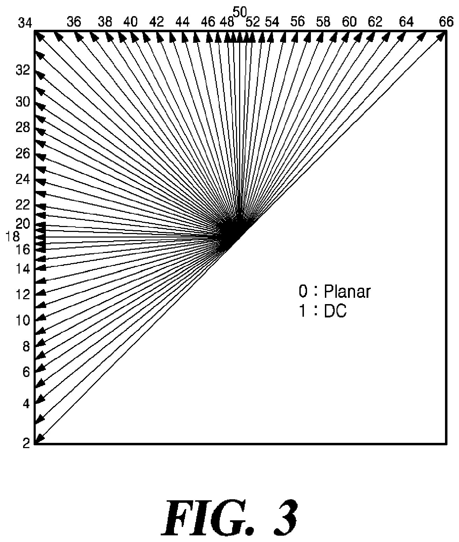

The intra-prediction unit 122 predicts pixels in the current block using pixels (reference pixels) positioned around the current block in the current picture including the current block. There is a plurality of intra-prediction modes according to the prediction directions. For example, as shown in FIG. 3, the plurality of intra-prediction modes may include two non-directional modes, which include a planar mode and a DC mode, and 65 directional modes. Neighboring pixels and an equation to be used are defined differently for each prediction mode.

The intra-predictor 122 may determine an intra-prediction mode to be used in encoding the current block. In some examples, the intra-predictor 122 may encode the current block using several intra-prediction modes and select an appropriate intra-prediction mode to use from the tested modes. For example, the intra-predictor 122 may calculate rate distortion values using rate-distortion analysis of several tested intra-prediction modes, and may select an intra-prediction mode that has the best rate distortion characteristics among the tested modes.

The intra-predictor 122 selects one intra-prediction mode from among the plurality of intra-prediction modes, and predicts the current block using neighboring pixels (reference pixels) and an equation determined according to the selected intra-prediction mode. Information about the selected intra-prediction mode is encoded by the entropy encoder 155 and transmitted to the video decoding apparatus.

The inter-predictor 124 generates a prediction block for the current block through motion compensation. The inter-predictor 124 searches for a block most similar to the current block in a reference picture which has been encoded and decoded earlier than the current picture, and generates a prediction block for the current block using the searched block.

Then, the inter-predictor generates a motion vector corresponding to a displacement between the current block in the current picture and the prediction block in the reference picture. In general, motion estimation is performed on a luma component, and a motion vector calculated based on the luma component is used for both the luma component and the chroma component. The motion information including information about the reference picture and information about the motion vector used to predict the current block is encoded by the entropy encoder 155 and transmitted to the video decoding apparatus. The inter-predictor 124 may perform interpolation on a reference picture or a reference block in order to increase the accuracy of prediction. That is, subpixels between two consecutive integer pixels are interpolated by applying filter coefficients to a plurality of consecutive integer pixels including the two integer pixels. When a process of searching for a block that is most similar to the current block for the interpolated reference picture is performed, the motion vector may be expressed not to the precision of the integer pixel but to the precision of the decimal unit. The precision or resolution of the motion vector may be set differently for each unit of a target region to be encoded, such as a slice, tile, CTU, or CU.

The subtractor 130 subtracts the prediction block generated by the intra-predictor 122 or the inter-predictor 124 from the current block to generate a residual block.

The transformer 140 may transform residual signals in a residual block. a two-dimensional size of the residual block, may be used as a transform unit (hereinafter, "TU"), a block size in which the transform is performed. Alternatively, the residual block may be partitioned into a plurality of subblocks, and each subblock may be used as a TU to transform the residual signals within the corresponding subblock.

The transformer 140 may split the residual block into one or more subblocks, and applies the transformation to the one or more subblocks, thereby transforming the residual values of the transform blocks from the pixel domain to the frequency domain. In the frequency domain, the transformed blocks are referred to as coefficient blocks or transform blocks containing one or more transform coefficient values. A two-dimensional transform kernel may be used for transformation, and one-dimensional transform kernels may be used for horizontal transformation and vertical transformation, respectively. The transform kernels may be based on a discrete cosine transform (DCT), a discrete sine transform (DST), or the like.

The transformer 140 may individually transform the residual block in a horizontal direction and a vertical direction. For transformation, various types of transform functions or transform matrices may be used. For example, a pair of transform functions for transformation in the horizontal direction and the vertical direction may be defined as a multiple transform set (MTS). The transformer 140 may select one transform function pair having the best transform efficiency in the MTS and transform the residual block in the horizontal and vertical directions, respectively. Information (mts_idx) on the transform function pair selected from the MTS is encoded by the entropy encoder 155 and signaled to the video decoding apparatus.

The quantizer 145 quantizes transform coefficients output from the transformer 140 using quantization parameters, and outputs the quantized transform coefficients to the entropy encoder 155. For some blocks or frames, the quantizer 145 may directly quantize a related residual block without transformation. The quantizer 145 may apply different quantization coefficients (scaling values) according to positions of the transform coefficients in the transform block. A matrix of quantization coefficients applied to quantized transform coefficients arranged in two dimensions may be encoded and signaled to the video decoding apparatus.

The reorganizer 150 may reorganize the coefficient values for the quantized residual value. The reorganizer 150 may change the 2-dimensional array of coefficients into a 1-dimensional coefficient sequence through coefficient scanning. For example, the reorganizer 150 may scan coefficients from a DC coefficient to a coefficient in a high frequency region using a zig-zag scan or a diagonal scan to output a 1-dimensional coefficient sequence. Depending on the size of the transformation unit and the intra-prediction mode, a vertical scan, in which a two-dimensional array of coefficients is scanned in a column direction, or a horizontal scan, in which two-dimensional block-shaped coefficients are scanned in a row direction, may be used instead of the zig-zag scan. That is, a scan mode to be used may be determined among the zig-zag scan, the diagonal scan, the vertical scan and the horizontal scan according to the size of the transformation unit and the intra-prediction mode.

The entropy encoder 155 encodes the one-dimensional quantized transform coefficients output from the reorganizer 150 using uses various encoding techniques such as Context-based Adaptive Binary Arithmetic Code (CABAC) and exponential Golomb, to generate a bitstream.

The entropy encoder 155 encodes information such as a CTU size, a CU split flag, a QT split flag, an MTT splitting type, and an MTT splitting direction, which are associated with block splitting, such that the video decoding apparatus may split the block in the same manner as in the video encoding apparatus. In addition, the entropy encoder 155 encodes information about a prediction type indicating whether the current block is encoded by intra-prediction or inter-prediction, and encodes intra-prediction information (i.e., information about an intra-prediction mode) or inter-prediction information (information about a reference picture index and a motion vector) according to the prediction type. In addition, the entropy encoder 155 encodes information related to quantization, that is, information on quantization parameters and information on a quantization matrix.

The inverse quantizer 160 inversely quantizes the quantized transform coefficients output from the quantizer 145 to generate transform coefficients. The inverse transformer 165 transforms the transform coefficients output from the inverse quantizer 160 from the frequency domain to the spatial domain and reconstructs the residual block.

The adder 170 adds the reconstructed residual block to the prediction block generated by the predictor 120 to reconstruct the current block. The pixels in the reconstructed current block are used as reference pixels in performing intra-prediction of a next block.

The loop filter unit 180 filters the reconstructed pixels to reduce blocking artifacts, ringing artifacts, and blurring artifacts generated due to block-based prediction and transformation/quantization. The loop filter unit 180 may include one or more of a deblocking filter 182, a sample adaptive offset (SAO) filter 184, or an adaptive loop filter (ALF) 186.

The deblocking filter 182 filters the boundary between the reconstructed blocks to remove blocking artifacts caused by block-by-block coding/decoding, and the SAO filter 184 performs additional filtering on the deblocking-filtered video. The SAO filter 184 is a filter used to compensate for a difference between a reconstructed pixel and an original pixel caused by lossy coding, and performs filtering in a manner of adding a corresponding offset to each reconstructed pixel. The ALF 186 performs filtering on a target pixel to be filtered by applying filter coefficients to the target pixel and neighboring pixels of the target pixel. The ALF 186 may divide the pixels included in a picture into predetermined groups, and then determine one filter to be applied to a corresponding group to differentially perform filtering on each group. Information about filter coefficients to be used for the ALF may be encoded and signaled to the video decoding apparatus.

The reconstructed blocks filtered through the loop filter unit 180 are stored in the memory 190. Once all blocks in one picture are reconstructed, the reconstructed picture may be used as a reference picture for inter-prediction of blocks in a picture to be encoded next.

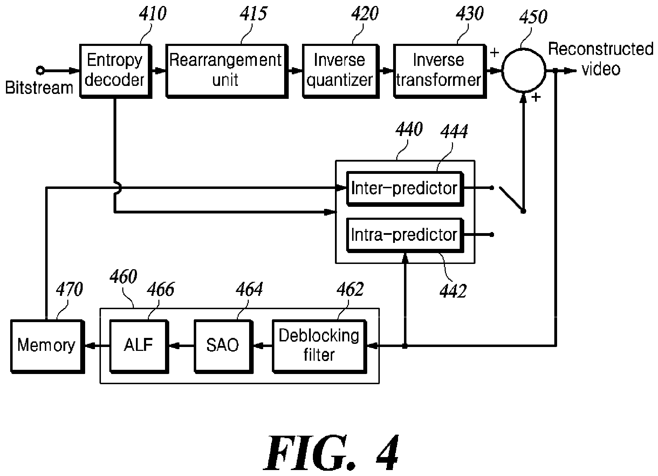

FIG. 4 is an exemplary functional block diagram of a video decoding apparatus capable of implementing the techniques of the present disclosure. Hereinafter, the video decoding apparatus and elements of the apparatus will be described with reference to FIG. 4.

The video decoding apparatus may include an entropy decoder 410, a reorganizer 415, an inverse quantizer 420, an inverse transformer 430, a predictor 440, an adder 450, a loop filter unit 460, and a memory 470.

Similar to the video encoding apparatus of FIG. 1, each element of the video decoding apparatus may be implemented in hardware, software, or a combination of hardware and software. Further, the function of each element may be implemented in software, and the microprocessor may be implemented to execute the function of software corresponding to each element.

The entropy decoder 410 determines a current block to be decoded by decoding a bitstream generated by the video encoding apparatus and extracting information related to block splitting, and extracts prediction information and information about a residual signal, and the like required to reconstruct the current block.

The entropy decoder 410 extracts information about the CTU size from the sequence parameter set (SPS) or the picture parameter set (PPS), determines the size of the CTU, and splits a picture into CTUs of the determined size. Then, the decoder determines the CTU as the uppermost layer, that is, the root node of a tree structure, and extracts splitting information about the CTU to split the CTU using the tree structure.

For example, when the CTU is split using a QTBTTT structure, a first flag (QT_split_flag) related to splitting of the QT is extracted to split each node into four nodes of a sub-layer. For a node corresponding to the leaf node of the QT, the second flag (MTT_split_flag) and information about a splitting direction (vertical/horizontal) and/or a splitting type (binary/ternary) related to the splitting of the MTT are extracted to split the corresponding leaf node in the MTT structure. Thereby, each node below the leaf node of QT is recursively split in a BT or TT structure.

As another example, when a CTU is split using the QTBTTT structure, a CU split flag (split_cu_flag) indicating whether to split a CU may be extracted. When the corresponding block is split, the first flag (QT_split_flag) may be extracted. In the splitting operation, zero or more recursive MTT splitting may occur for each node after zero or more recursive QT splitting. For example, the CTU may directly undergo MTT splitting without the QT splitting, or undergo only QT splitting multiple times.

As another example, when the CTU is split using the QTBT structure, the first flag (QT_split_flag) related to QT splitting is extracted, and each node is split into four nodes of a lower layer. Then, a split flag (split_flag) indicating whether a node corresponding to a leaf node of QT is further split in the BT and the splitting direction information are extracted.

Once the current block to be decoded is determined through splitting in the tree structure, the entropy decoder 410 extracts information about a prediction type indicating whether the current block is intra-predicted or inter-predicted. When the prediction type information indicates intra-prediction, the entropy decoder 410 extracts a syntax element for the intra-prediction information (intra-prediction mode) for the current block. When the prediction type information indicates inter-prediction, the entropy decoder 410 extracts a syntax element for the inter-prediction information, that is, information indicating a motion vector and a reference picture referred to by the motion vector.

The entropy decoder 410 also extracts information about quantized transform coefficients of the current block as information related to quantization and information about residual signals.

The reorganizer 415 may change the sequence of the one-dimensional quantized transform coefficients entropy-decoded by the entropy decoder 410 to a 2-dimensional coefficient array (i.e., block) in a reverse order of the coefficient scanning performed by the video encoding apparatus.

The inverse quantizer 420 inversely quantizes the quantized transform coefficients using the quantization parameter. The inverse quantizer 420 may apply different quantization coefficients (scaling values) to the quantized transform coefficients arranged in two dimensions. The inverse quantizer 420 may perform inverse quantization by applying a matrix of quantization coefficients (scaling values) from the video encoding apparatus to a two-dimensional array of quantized transform coefficients.

The inverse transformer 430 inversely transforms the inversely quantized transform coefficients from the frequency domain to the spatial domain to reconstruct residual signals, thereby generating a reconstructed residual block for the current block. In addition, when the MTS is applied, the inverse transformer 430 determines transform functions or transform matrices to be applied in the horizontal and vertical directions, respectively, using the MTS information (mts_idx) signaled from the video encoding apparatus, and uses the determined transform functions to inversely transform the transform coefficients in the transform block in the horizontal and vertical directions.

The predictor 440 may include an intra-predictor 442 and an inter-predictor 444. The intra-predictor 442 is activated when the prediction type of the current block is intra-prediction, and the inter-predictor 444 is activated when the prediction type of the current block is inter-prediction.

The intra-predictor 442 determines an intra-prediction mode of the current block among a plurality of intra-prediction modes based on the syntax element for the intra-prediction mode extracted from the entropy decoder 410, and predicts the current block using the reference pixels around the current block according to the intra-prediction mode.

The inter-predictor 444 determines a motion vector of the current block and a reference picture referred to by the motion vector using the syntax element for the intra-prediction mode extracted from the entropy decoder 410, and predicts the current block based on the motion vector and the reference picture.

The adder 450 reconstructs the current block by adding the residual block output from the inverse transformer and the prediction block output from the inter-predictor or the intra-predictor. The pixels in the reconstructed current block are used as reference pixels in intra-predicting a block to be decoded next.

The loop filter unit 460 may include at least one of a deblocking filter 462, an SAO filter 464, and an ALF 466. The deblocking filter 462 deblocking-filters the boundary between the reconstructed blocks to remove blocking artifacts caused by block-by-block decoding. The SAO filter 464 performs filtering in a manner of adding the reconstructed block after deblocking filtering to corresponding offsets so as to compensate for a difference between the reconstructed pixel and the original pixel caused by lossy coding. The ALF 466 performs filtering on a target pixel to be filtered by applying filter coefficients to the target pixel and neighboring pixels of the target pixel. The ALF 466 may divide the pixels in a picture into predetermined groups, and then determine one filter to be applied to a corresponding group to differentially perform filtering on each group. The filter coefficient of the ALF is determined based on the information about the filter coefficient decoded from the bitstream.

The reconstructed block filtered through the loop filter unit 460 is stored in the memory 470. When all blocks in one picture are reconstructed, the reconstructed picture is used as a reference picture for inter-prediction of blocks in a picture to be encoded next.

Meanwhile, when the current block is an intra block, the current block may be partitioned into a plurality of subblocks and then be encoded or decoded on a per subblock basis. Hereinafter, intra prediction using subblock partitioning may be referred to as ISP (Intra Sub-Partition).

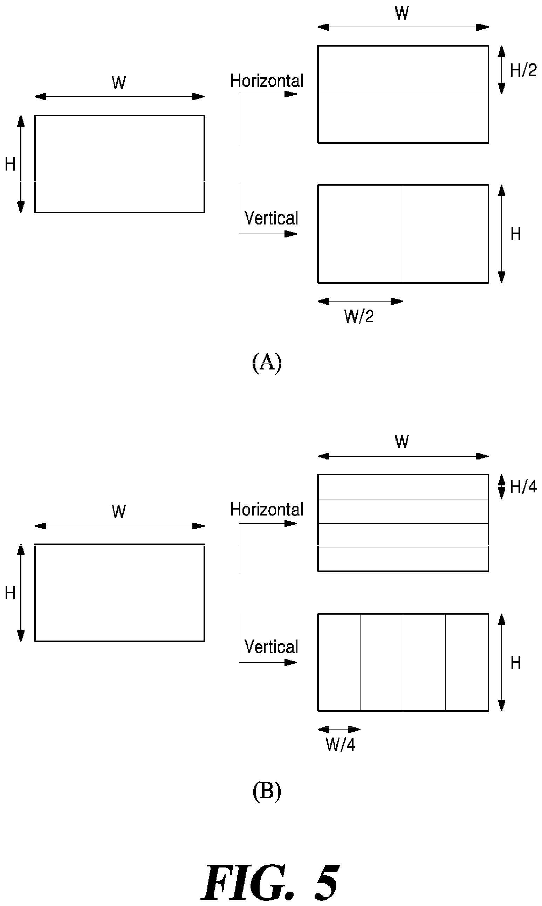

FIG. 5 is an exemplary view illustrating a type in which a current block is partitioned into a plurality of subblocks in the ISP mode.

The current block is partitioned into two or four subblocks in a horizontal or vertical direction depending on the block size. A minimum block size up to which the ISP is applicable may be 4x8 or 8x4. Also, every subblock may be limited to having a minimum of 16 samples. Under this limitation, as illustrated in (a) of FIG. 5, a 4x8 or 8x4 block may be partitioned into two subblocks in the horizontal or vertical direction. As illustrated in (b) of FIG. 5, other blocks are partitioned into four subblocks in the horizontal or vertical direction.

If ISP is applied, the video encoding apparatus encodes the current block by the unit of subblocks. That is, the intra predictor 122 intra-predicts a first subblock and generates a residual block for the subblock. The residual block is transformed and quantized by using a transform unit equal to a size of the subblock by the transformer 140 and the quantizer 150. The quantized transform coefficients for the subblock are encoded by the entropy encoder 155 and transmitted to the video decoding apparatus. Meanwhile, the inverse quantizer 160 and the inverse transformer 165 reconstruct the residual block for the subblock by inversely quantizing and inversely transforming the quantized transform coefficients in the subblock. The subblocks are reconstructed by adding the reconstructed residual block and the intra predicted subblock.

Afterwards, the intra predictor sequentially encodes the next subblock in the same manner as the above-described method. At this time, the next subblock is predicted by using the pixels within the reconstructed subblock.

The video decoding apparatus also sequentially decodes the current block in subblock units. Due to the sequential decoding, the previously reconstructed subblock may be used for intra prediction of the next subblock.

Hereinafter, an encoding and decoding process using a differential encoding technique and its related encoding techniques according to the present disclosure will be described.

As described above, the video encoding apparatus transforms residual signals into transform coefficients of a frequency domain, encodes the transform coefficients, and signals them to the video decoding apparatus. The video decoding apparatus inversely transforms the transform coefficients into residual signals of a spatial domain. However, most of the transform coefficients generated as a result of the transform may be positioned in a highfrequency region, depending on the characteristics of the video or residual signals. In this case, the encoding efficiency may be reduced by encoding the transform coefficients of the frequency domain, rather than by directly encoding the residual signals of the spatial domain.

A transform skip (TS) mode is a technique of entropy encoding residual signals without transforming them into signals of the frequency domain. That is, residual signals of the spatial domain or quantized residual signals are directly entropy-encoded without being transformed into the frequency domain. Generally, the transform skip mode is not better in encoding performance than DCT (Discrete Cosine Transform). However, a particular type of content such as screen content may include many residuals in a high frequency region, due to the boundary of a graphic element with high color contrast. Thus, the transform skip mode may be useful.

Whether to apply the transform skip mode may be signaled for each transform unit (TU) which is a unit (block size) of transform. That is, the video encoding apparatus encodes information indicating whether the transform skip mode is applied or not, for example, a transform skip flag (transform_skip_flag[x0][y0][cIdx]), for each transform unit and transmits it to the video decoding apparatus. Here, (x0, y0) is the position of the top left of a transform unit within the current picture, and cIdx is an indicator for indicating a color component, where 0 represents luma, 1 represents Cb and 2 represents Cr.

Meanwhile, whether to enable the transform skip mode may be defined in a high-level syntax structure, for example, SPS or PPS. For example, the video encoding apparatus encodes, as a syntax of SPS, a transform skip enable flag (transform_skip_flag) indicating whether the transform skip mode is enabled or not. If the transform skip mode is not enabled (e.g., (transform_skip_enabled_flag = 0), transform_skip_flag for each transform unit within the corresponding sequence is not encoded, and the residual signals in all the transform units are transformed. If transform_skip_flag does not exist in a bitstream, the video decoding apparatus sets transform_skip_enabled_flag = 0 and performs inverse transform of received residual signals (transform coefficients). On the other hand, if the transform skip mode is enabled (e.g., (transform_skip_enabled_flag = 1), transform_skip_flag indicating whether transform skip is applied or not may be signaled for each transform unit. The video decoding apparatus performs or skips transform for a transform unit according to transform_skip_flag corresponding to the transform unit.

Meanwhile, a maximum size of a transform unit to which transform skip is applicable may be limited to MaxTsSize. The maximum size MaxTsSize for transform skip may be a one-dimensional value indicating the length of one side of a maximum transform unit for which transform skip is enabled, and may be a fixed value such as 32 or 64. Alternatively, the video encoding apparatus may encode a syntax element indicating the maximum size MaxTsSize in a high-level syntax structure, for example, SPS or PPS, and transmit it to the video decoding apparatus. Residual signals in a larger transform unit than the maximum block size MaxTsSize allowed for transform skip are always encoded after being transformed into transform coefficients. Accordingly, the video encoding apparatus does not encode transform_skip_flag for a larger transform unit than the maximum block size MaxTsSize for transform skip. If transform_skip_flag does not exist in a bitstream, the video decoding apparatus inversely transforms the transform coefficients within the corresponding transform unit into residual signals. On the other hand, transform_skip_flag is decoded for a transform unit smaller than MaxTsSize. Accordingly, the video decoding apparatus determines whether to perform inverse transform depending on the value of transform_skip_flag. While in the above description the maximum block size MaxTxSize for transform skip is a one-dimensional value, the present disclosure is not limited thereto. That is, the horizontal and vertical lengths of a maximum block for transform skip may be independently determined and have different values. In this case, syntax elements indicating the horizontal and vertical lengths of a maximum transform unit may be signaled individually.

Hereinafter, a differential coding technique capable of enhancing compression performance in a transform skip mode will be described.

Residual signals generated through prediction may be encoded using a differential encoding technique. This differential encoding technique, when used together with the transform skip mode, may provide higher compression performance by reducing the total amount of energy in a residual component for entropy encoding. A method of applying differential encoding to a target block will be described below. Here, the target block may be a CU. Alternatively, the target block may be a TU. For example, as in the case of the above-mentioned ISP, if a CU to which intra prediction is applied is partitioned into a plurality of subblocks and prediction encoding or prediction decoding is performed on a per subblock basis, the target block may be the subblock. Hereinafter, it is assumed that the target block is a CU for convenience of explanation.

## 1. Differential encoding/decoding process

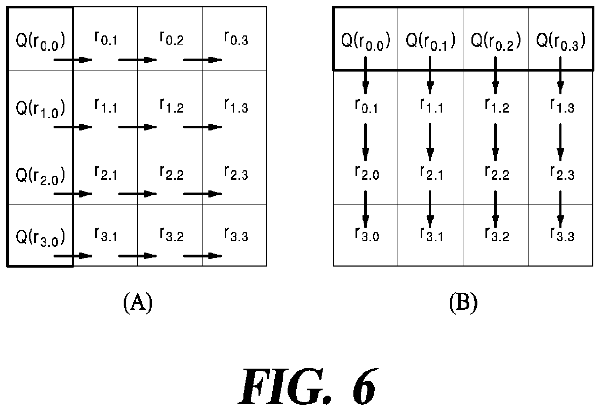

FIG. 6 is an exemplary view for explaining a differential encoding technique according to the present disclosure.

Differential encoding may be performed in a horizontal direction or vertical direction. When differential encoding is performed in the horizontal direction as illustrated in (A) of FIG. 6, the video encoding apparatus computes a differential value between a target residual signal to be encoded within a residual block and an adjacent residual signal to the left of the target residual signal within the residual block. Also, the differential value, not the target residual signal itself, is entropy-encoded. Once the horizontal differential coding technique is applied to residual signals $r_{i,j}$ of block of an NXM size (N and M are natural numbers), the resultant residual signal $\widetilde{r_{i,j}}$ ($0 \leq i$ < M-1, i is a natural number) may be expressed by Equation 1. In particular, the residual signal at a position (i, j) is modified through a subtraction with the residual signal at a position (i, j-1). Here, (i, j) denotes an i-th row and a j-th column.

[Equation 1]

$$\tilde{r}_{i,j} = \begin{cases} Q(r_{i,j}), & 0 \leq i \leq (M-1), \ j = 0 \\ Q(r_{i,j}) - Q(r_{i,(j-1)}), & 0 \leq i \leq (M-1), \ 1 \leq j \leq (N-1) \end{cases}$$

where Q(r) denotes a quantized residual signal. Differential encoding may be applied to quantized residual signals resulting from quantization of residual signals for which transform is skipped.

As shown in Equation 1, in the case of horizontal differential encoding, the video encoding apparatus entropy-encodes the residual signal $\widetilde{r_{i,j}}$ and then transmits it to the video decoding apparatus. The horizontal differential encoding may be sequentially performed for every column of the block.

Meanwhile, if vertical differential encoding is performed as illustrated in (B) of FIG. 6, the video encoding apparatus computes a differential value between a target residual signal to be encoded within a residual block and an adjacent residual signal above the target residual signal within the residual block. Also, the differential value, not the target residual signal itself, is entropy-encoded. Once the vertical differential encoding is applied to a residual signal $r_{i,j}$ of block of an NXM size (N and M are natural numbers), the resultant residual signal $\widetilde{r_{i,j}}$ ($0 \leq j$ < N-1, j is a natural number) may be expressed by Equation 2. That is, the residual signal at a position (i, j) is modified through a subtraction with the residual signal at a position (i-1, j). Here, (i, j) denotes an i-th row and a j-th column.

[Equation 2]

$$\tilde{r}_{i,j} = \begin{cases} Q(r_{i,j}), & i = 0, \ 0 \leq j \leq (N-1) \\ Q(r_{i,j}) - Q(r_{(i-1),j}), & 1 \leq i \leq (M-1), \ 0 \leq j \leq (N-1) \end{cases}$$

As illustrated in Equation 2, in the case of vertical differential encoding, the video encoding apparatus entropy-encodes the residual signal $\widetilde{r_{i,j}}$ and then transmits it to the video decoding apparatus. The vertical differential encoding may be sequentially performed for every row of the block.

If a horizontal differential encoding technique is applied, the video decoding apparatus reconstructs the residual signals as illustrated in Equation 3. That is, the video decoding apparatus modifies residual signals in a residual block reconstructed from a bitstream according to an inverse process (hereinafter, "differential decoding") of horizontal differential encoding. A target residual signal to be modified within the residual block is modified such a way that left residual signals positioned to the left of the target residual signal in the same row as the target residual signal are added to the target residual signal.

【Equation 3】

$$Q(r_{i,j}) = \sum_{k=0}^{j} \tilde{r}_{i,k}, \quad 0 \leq i \leq (M-1), \quad 0 \leq j \leq (N-1)$$

Meanwhile, if a vertical differential encoding technique is applied, the video decoding apparatus reconstructs the residual signals as illustrated in Equation 4. The video decoding apparatus modifies residual signals in a residual block reconstructed from a bitstream according to vertical differential decoding. A target residual signal to be modified within the reconstructed residual block is modified such a way that upper residual signals positioned above the target residual signal in the same column as the target residual signal are added to the target residual signal.

【Equation 4】

$$Q(r_{i,j}) = \sum_{k=0}^{i} \tilde{r}_{k,j}, \quad 0 \le i \le (M-1), \quad 0 \le j \le (N-1)$$

Residual signals modified according to differential decoding are inversely quantized and then are added to prediction pixels.

The video encoding apparatus signals, to the video decoding apparatus, information on whether differential encoding is applied to the target block and the direction of differential encoding. This will be described later.

The differential encoding technique may be applied to residual signals generated through intra prediction. In other words, if it is determined the differential encoding technique is applied to the target block, the target block is predicted using intra prediction.

An intra prediction mode of the target block may be derived from the direction of differential encoding. It is inferred that the intra prediction mode of the target block is the same as the direction of differential encoding. The intra predicted residual signals tend to have a similar pattern along the intra prediction direction. Accordingly, if differential encoding is applied in the same direction as the intra prediction direction, a differential value between residual signals is small, and the encoding efficiency may increase. For a block to which differential encoding is applied, the intra predictors 122 and 422 of the video encoding apparatus and video decoding apparatus set the intra prediction mode of the target block equal to the direction of differential encoding. This means that the signaling of information on the intra prediction mode is not required. If 67 intra prediction modes are used, a large number of bits are used to signal information on the intra prediction mode applied to the current block. If differential encoding is applied, the number of bits used to encode the information on the intra prediction mode may be reduced by inferring the intra prediction mode from the direction of differential encoding. That is, the amount of code transmitted is reduced by deriving the intra prediction mode from a syntax element for the direction of differential encoding.

In some other embodiments, if differential encoding is applied, the intra prediction mode of the current block may be limited in such a way that only intra prediction modes within a threshold range from the direction of differential encoding are used. For example, if horizontal differential encoding is applied, only a horizontal mode (INTRA_ANGULAR18 of FIG. 3) and a predetermined number of intra prediction modes close to the horizontal mode, among all of the intra prediction modes, are allowed as the intra prediction modes of the target block.

If the vertical differential encoding is applied, only a vertical direction mode (INTRA_ANGULAR50 of FIG. 3) and a predetermined number of intra prediction modes close to the vertical direction mode are allowed as an intra prediction mode of the target block.

Accordingly, the intra prediction mode of the current block is selected from among some intra prediction modes similar to the differential encoding direction not from among all of the intra prediction modes, and the number of bits used to encode the intra prediction mode of the current block may be reduced. The video decoding apparatus may generate a candidate set comprised of intra prediction modes within a threshold range from the differential encoding direction, and set, as the intra prediction mode of the target block, a candidate which is indicated by information on an intra prediction mode received from the video encoding apparatus, among candidates in the candidate set.

While, in the above, a differential encoding technique has been described as being applicable only to residual signals generated through intra prediction, the present disclosure is not limited to this and the differential encoding may be used together with inter prediction.

The above-described differential encoding or decoding technique is applicable to both luma and chroma components of a target block. If it is determined that a differential encoding technique is applied to the target block, the above-described differential encoding technique may be applied to residual signals of the luma component of the target block and residual signals of the chroma component thereof. Alternatively, whether to apply a differential encoding technique or not may be determined independently for the luma component and chroma component of the target block.

Hereinafter, a method for controlling the application of a differential encoding or decoding technique will be described.

2. Control of Differential Encoding at High Level

Differential encoding may enhance compression performance depending on content but, on the contrary, may deteriorate compression performance. For a video sequence not suitable for application of differential encoding encoding syntax elements related to differential encoding at a block level becomes a cause of decrease in compression performance. Accordingly, it is desirable to determine whether to allow differential encoding in the unit of each video sequence comprised of a plurality of pictures.

In some embodiments, the video encoding apparatus encodes, into an SPS, a first enable flag (enabled_flag) indicating whether differential encoding at the block level is enabled or not. As described above, differential encoding is applied together with a transform skip mode. Accordingly, when the above transform skip enable flag in the SPS indicates that transform skip is enabled (transform_skip_enabled_flag = 1), a first enabled flag indicating whether differential encoding is enabled is encoded. When the transform skip enable flag indicates that transform skip is not enabled (transform_skip_enabled_flag = 0), the first enable flag is not encoded. If the first enable flag does not exist, the video decoding apparatus sets the enable flag to 0. That is, the video decoding apparatus does not apply a differential decoding technique to the current video sequence.

Meanwhile, a second enable flag indicating whether differential encoding is enabled for a chroma component of the current video sequence may be further encoded in the SPS. Through this, whether differential encoding is applied to the chroma component or not may be controlled at a sequence level, independently from a luma component. The second enable flag may be encoded regardless of the value of the first enable flag. That is, if the transform skip enable flag is 1, both the first and second enable flags may be encoded. Alternatively, the second enable flag may be encoded depending on the value of the first enable flag. For example, if the first enable flag is 1 (that is, indicates that differential encoding is enabled), the second enable flag may be encoded. If the second enable flag does not exist in the SPS, the video decoding apparatus sets the second enable flag to 0. That is, the video decoding apparatus does not apply a differential decoding technique to the chroma component of the current sequence.

In some other embodiments, a common control flag for commonly controlling whether to enable differential encoding for both the luma component and chroma component of the current video sequence or not may be encoded in the SPS. The common control flag may be encoded when the transform skip enable flag indicates that transform skip is enabled. If the common control flag indicates that differential encoding is enabled (for example, common control flag = 1), a differential encoding technique is allowed for all of the luma and chroma components of the current video sequence. On the other hand, if the common control flag does not indicate that differential encoding is not enabled (for example, common control flag = 0), a differential encoding technique may be applied to neither of the luma and chroma components in the current video sequence. Meanwhile, in order to independently control whether to apply a differential encoding technique to the luma and chroma components, if the common control flag is 1, the video encoding apparatus may further encode a luma flag and a chroma flag in the SPS to respectively indicate whether differential encoding is enabled for each of the luma and chroma components. Here, the chroma flag may be encoded when the luma flag indicates that differential encoding is applied.

In some other embodiments, the common control flag may be encoded in the SPS, and at least one of the luma flag and the chroma flag may be encoded at a lower level than the SPS, for example, to a PPS or a picture header. For example, the On/Off of differential encoding for both the luma component and the chroma component are controlled at the sequence level by the common control flag. If the common control flag of the sequence level indicates that differential encoding is enabled, the luma flag and the chroma flag are encoded in the PPS or picture header. Accordingly, whether differential encoding is enabled or not may be controlled independently for the luma component and the chroma component, for one picture or one or more pictures belonging to the corresponding sequence. For another example, if the common control flag indicates that differential encoding is enabled, the luma flag may be encoded in the SPS, and the chroma flag may be encoded in the PPS or picture header.

In some other embodiments, the signaling of high-level syntaxes for controlling whether differential encoding is enabled as mentioned in the previous embodiments may be limited by the maximum transform unit size that enables transform skip. That is, all or some of a common control flag, flags (first enable flag and luma flag) for controlling the luma component, and flags (second enable flag and chroma flag) for controlling the chroma component may be encoded only when the maximum transform unit size MaxTsSize allowed for transform skip is less than or equal to a specific threshold value. MaxTsSize for transform skip may be defined at a level of the SPS. For example, if the transform skip enable flag indicates that transform skip is enabled for the corresponding sequence, information indicating the maximum transform unit size MaxTsSize for transform skip and the flag for controlling the luma component are encoded. However, the flag for controlling the chroma component is encoded only when MaxTsSize is less than or equal to a threshold value. If MaxTsSize is larger than the threshold value, the flag for controlling the chroma component is not encoded, and a differential encoding technique for the chroma component is not enabled. For another example, both the flag for controlling the luma component and the flag for controlling the chroma component may be encoded only when MaxTsSize is less than or equal to a threshold value. Here, the threshold value may be a fixed value, or may be adaptively determined according to a chroma sampling format.

In an alternative embodiment, the signaling of high-level syntaxes for controlling whether differential encoding is enabled or not as mentioned in the previous embodiments may be limited by the maximum transform unit size allowed for transform, instead of the maximum transform unit size allowed for the transform skip. As mentioned previously, the size of a transform unit for transforming a residual block is determined by the size of the residual block or the size of subblocks into which the residual block is partitioned. However, there may be a restriction on sizes of transform units, and the maximum transform unit size Max_Transform_Size that enables transform may be defined in the SPS. Transform is limited to less than or equal to the maximum transform unit size Max_Transform_Size. If the residual block is larger than the maximum transform unit size Max_Transform_Size, the residual block is partitioned into subblocks of the maximum transform unit size and transformed by the unit of the subblocks. The high-level syntaxes for controlling whether differential encoding is enabled or not may be signaled only when the maximum transform unit Max_Transform_Size that enables transform is less than or equal to a preset threshold value.

In another embodiment, control flags indicating whether differential encoding is enabled or not may be encoded in the SPS for inter prediction and intra prediction, respectively. An inter control flag may be encoded independently from an intra control flag. Alternatively, the inter control flag may be encoded depending on the intra control flag. For example, an inter control flag indicating whether differential encoding for inter prediction is enabled is encoded only when a differential encoding technique for intra prediction is enabled. If the inter control flag is not encoded, the differential encoding technique is not applied to residual signals generated through inter prediction.

Moreover, a differential encoding technique for inter prediction and intra prediction may be adaptively controlled depending on color components. For example, differential encoding is enabled for both luma and chroma signals in the case of intra prediction, but is enabled only for luma signals in the case of inter prediction. In another example, differential encoding for an inter luma signal may be controlled depending on whether differential encoding is enabled for an intra luma signal. That is, if differential encoding is enabled for the intra luma signal, differential encoding for the inter luma signal is enabled too. Otherwise, differential encoding is not enabled for the inter luma signal. For another example, whether to enable differential encoding for luma and chroma signals in inter prediction is determined depending on whether differential encoding for the intra luma signal is enabled or not. That is, if differential encoding is enabled for the intra luma signal, differential encoding is enabled for the inter luma and inter chroma signals. Otherwise, differential encoding is applied to neither of the inter luma and inter chroma signals.

Hereinafter, in the case that differential encoding is enabled at the block level by the above high-level syntax, a method for controlling differential encoding at the block level will be described.


3. Control of Differential Encoding at Block Level

Differential encoding for a target block is controlled by a first syntax element indicating whether differential encoding is applied or not and a second syntax element indicating the direction of differential encoding. The first and second syntax elements for controlling differential encoding may be signaled separately for each of the luma component and chroma component of the target block.

If differential encoding is enabled for the luma component of a current video sequence (or a picture belonging to the sequence), the video encoding apparatus encodes the first syntax element indicating whether differential encoding is applied to luma components of the target block (hereinafter, "luma block"). If the first syntax element indicates that differential encoding is applied to the luma block, the video encoding apparatus encodes the second syntax element indicating the direction of differential encoding.

As described above, differential encoding is a tool applicable in the transform skip mode. If the width and height of the target block are larger than the maximum block size MaxTsSize for transform skip, differential encoding should be limited. Accordingly, if the width and height of the target block are larger than the maximum block size MaxTsSize for transform skip, the video encoding apparatus does not encode the first syntax element and second syntax element for the luma block. Thus, the first and second syntax elements for the luma block do not exist in a bitstream, and differential encoding of residual signals is not performed.

If the width and height of the target block are smaller than or equal to the maximum block size MaxTsSize, the video decoding apparatus extracts the first syntax element from the bitstream and determines whether differential encoding is applied to the luma block corresponding to the target block. If the first syntax element indicates that differential encoding is applied, the video decoding apparatus extracts the second syntax element from the bitstream and thereby determines the direction of differential encoding.

On the contrary, if at least one of the width and height of the target block is smaller than or equal to the maximum block size MaxTsSize, the video decoding apparatus does not extract the first syntax element and sets the value of the first syntax element to a value indicating that differential encoding is not applied. Accordingly, the second syntax element is not extracted, and differential decoding for the luma block is not performed.

Meanwhile, if it is determined that differential encoding is enabled for the chroma component of the video sequence, the video encoding apparatus encodes the first syntax element indicating whether differential encoding is applied to the chroma component of the target block (hereinafter, "chroma block"). If the first syntax element indicates that differential encoding is applied to the chroma block, the second syntax element indicating the direction of differential encoding of the chroma block is encoded.

A restriction is required to limit the size of a chroma block to which differential encoding is applied within a range in which transform skip is enabled. In particular, for a target block (CU) into which a CTU is partitioned by a QTBT or QTBTTT partitioning structure, the target block may have the shape of a rectangle of which width and height are different, as well as a square shape. Accordingly, the above restriction should be satisfied in consideration of various shapes of the target block.

In some embodiments, such a requirement may be satisfied by using the maximum block size MaxTsSize and chroma sampling format for transform skip.

The header (i.e., SPS) of the video sequence includes a syntax element (chroma_format_idc) indicating the chroma sampling format of the corresponding sequence. Depending on chroma_format_idc, the chroma sampling format, the horizontal scaling factor (SubWidthC), and the vertical scaling factor (SubHeightC) may be defined as in the following Table 1.

[Table 1]

| chroma_format_ide | Chroma format | SubWidthC | SubHeightC |
|---|---|---|---|
| 0 | Monochrome | 1 | 1 |
| 1 | 4:2:0 | 2 | 2 |
| 2 | 4:2:2 | 2 | 1 |
| 3 | 4:4:4 | 1 | 1 |

To apply differential encoding to the chroma block, the values obtained by respectively dividing the width and height of the target block by the horizontal scaling factor SubWidthC and the vertical scaling factor SubHeightC determined according to the chroma format should be smaller than or equal to the maximum block size MaxTsSize allowed for transform skip. Accordingly, when the value obtained by dividing the width of the target block by the horizontal scaling factor SubWidthC is larger than MaxTsSize or when the value obtained by dividing the height of the target block by the vertical scaling factor SubHeightC is larger than MaxTsSize, differential encoding is not applied to the chroma block. Only when this condition is satisfied, the video encoding apparatus encodes a first syntax element indicating whether differential encoding is applied to the chroma block or not and encodes a second syntax element indicating the direction of differential encoding depending on the first syntax element. If this condition is not satisfied, the first and second syntax elements for the chroma block are not encoded.

If the values obtained by respectively dividing the width and height of the target block by the horizontal scaling factor SubWidthC and the vertical scaling factor SubHeightC determined according to the chroma format are smaller than or equal to the maximum block size MaxTsSize for transform skip, the video decoding apparatus extracts, from the bitstream, the first syntax element indicating whether differential encoding is applied to the chroma block and determines whether differential encoding has been applied to the chroma block corresponding to the target block or not. If the first syntax element indicates that differential encoding is applied, the video decoding apparatus determines the direction of differential encoding of the chroma block by extracting the second syntax element from the bitstream.

On the other hand, if the condition is not satisfied, the video decoding apparatus does not extract the first syntax element but sets the value of the first syntax element to a value indicating that differential encoding is not applied. Accordingly, the second syntax element is not extracted, and differential decoding of the chroma block is not performed.

In other embodiments, the condition that the size of the chroma block to which differential decoding is applied should be limited within a range in which transform skip allowed may be checked by signaling information on the maximum transform unit size MaxTsSizeC to be applied to transform skip of the chroma block. This information may be encoded within a high-level syntax structure such as an SPS, a PPS, or a picture header. The video encoding apparatus applies differential encoding to the chroma block and encodes related syntaxes (first and second syntax elements for the chroma block), only when the width and height of the target block are smaller than or equal to MaxTsSizeC. Alternatively, the video encoding apparatus may apply differential encoding to the chroma block and encode related syntaxes (first and second syntax elements for the chroma block), only when the values obtained by dividing the width and height of the target block by the above-mentioned horizontal scaling factor SubWidthC and vertical scaling factor SubHeightC are smaller than or equal to MaxTsSizeC.

As described above, if differential encoding is applied, the video encoding apparatus intra-predicts a target block by using the same intra prediction direction as the differential decoding direction and generates a residual block which is the difference between the target block and a prediction block. Residual signals in the residual block are quantized, differentially encoded according to the direction of differential encoding, and then is entropy-encoded. The video decoding apparatus reconstructs the residual signals from the bitstream and modifies the residual signals by performing differential decoding according to the direction of differential encoding for the reconstructed residual signals. The modified residual signals are inversely quantized and then added to the prediction block. The video decoding apparatus also generates a prediction block by intra-predicting the target block by using the same intra prediction direction as the differential encoding direction.

Meanwhile, differential encoding may be applied to inter prediction as well. That is, the video encoding apparatus performs differential encoding of the residual signals generated by inter prediction, according to the direction of differential encoding. The video decoding apparatus reconstructs the residual signals from the bitstream and then modifies the residual signals which perform differential decoding according to the direction of differential encoding. After inverse quantization, the modified residual signals are added to the prediction block generated by inter prediction.

In the case of differential encoding in inter prediction, there may be a restriction according to the chroma sampling format. For example, in the case of 4:2:0, differential encoding for a chroma signal may not be applied. Alternatively, differential encoding for a chroma signal may not be applied to other formats than the 4:4:4 format.

In the above embodiments, a block size for applying differential encoding is limited by a one-dimensional variable MaxTsSize. However, in differential encoding, the differential value between neighboring residual signals is sequentially calculated for each pixel and thus a processing delay may be caused. Particularly, the delay may be increased if the block size becomes larger and the difference between the width and height of the block is large. Also, if differential encoding is limited depending on one constant value MaxTsSize, the application of differential encoding for a block whose difference between width and height is large may decrease encoding efficiency.

Another aspect of the present disclosure to be described later relates to a block level control method for solving this problem. Although the following is a description of differential encoding of luma components of a target block (luma block), it is apparent that the same principle applies to the aforementioned chroma block.

In some embodiments, the size of a maximum transform unit that enables transform skip is defined independently for horizontal and vertical directions. That is, the horizontal length MaxTsSize_X and vertical length MaxTsSize_Y of the maximum transform unit are each defined, and information on these lengths is signaled in an SPS or PPS. Differential encoding is applicable when the width of the target block is smaller than or equal to the horizontal length MaxTsSize_X and the height of the target block is smaller than or equal to the vertical length MaxTsSize_Y. Accordingly, when the condition is satisfied, the video encoding apparatus encodes a first syntax element indicating whether differential encoding is applied to the target block or not and encodes a second syntax element indicating the direction of differential encoding depending on the first syntax element. If the condition is not satisfied, the video encoding apparatus does not apply differential encoding to the target block. Accordingly, the first and second syntax elements are not encoded. Only when the condition is satisfied, the video decoding apparatus extracts, from a bitstream, a first syntax element indicating whether differential encoding is applied to the target block or not and extracts a second syntax element indicating the direction of differential encoding depending on the first syntax element.

In some other embodiments, information on the maximum block size to which differential encoding may be applied, apart from the maximum transform unit size that enables transform skip, may be separately encoded. The horizontal length Max_Hor_Size and vertical length Max_Ver_Size of the maximum block size may be encoded within an SPS, a PPS, a picture header, or a slice header. The horizontal length Max_Hor_Size and the vertical length Max_Ver_Size may have the same value or different values. If the same value is used, information on either the horizontal length or the vertical length may be encoded. Differential encoding is applicable when the width of the target block is smaller than or equal to the horizontal length Max_Hor_Size and the height of the target block is smaller than or equal to the vertical length Max_Ver_Size. Considering that differential encoding is used in the transform skip mode, the horizontal length Max_Hor_Size and the vertical length Max_Ver_Size may be set to smaller than or equal to the maximum transform unit size (e.g., MaxTsSize) allowed for the transform skip.

Alternatively, the maximum transform unit size that enables transform skip, as well the horizontal length Max_Hor_Size and the vertical length Max_Ver_Size, may be used as a limitation for the block size for differential encoding. For example, differential encoding is applicable only when the width of the target block is smaller than Max_Hor_Size and MaxTsSize and the height of the target block is smaller than Max_Ver_Size and MaxTsSize. For another example, if the maximum transform unit size for transform skip is defined in horizontal and vertical directions, differential encoding is applicable only when the width of the target block is smaller than Max_Hor_Size and MaxTsSize_X and the height of the target block is smaller than Max_Ver_Size and MaxTsSize_Y.

In some other embodiments, differential encoding for the target block may be applied even if only one of the restriction on the width of the target block and the restriction on the height thereof is satisfied. That is, if the width of the target block is less than or equal to a horizontal threshold or the height of the target block is less than or equal to a vertical threshold, differential encoding for the target block may be applied. However, differential encoding is limited for a direction of exceeding the threshold. For example, if the restriction on the width of the target block is satisfied but the restriction on the height of the target block is not satisfied, differential encoding using the vertical direction is limited, and only differential encoding using the horizontal direction is allowed. Here, the horizontal threshold may be one or both of the above-described Max_Hor_Size and MaxTsSize_X (or MaxTsSize), and the vertical threshold may be one or both of the above-described Max_Ver_Size and MaxTsSize_Y (or MaxTsSize). Max_Hor_Size and Max_Ver_Size may have the same value.

In this embodiment, if one or more of the restriction on the width of the target block and the restriction on the height of the target block are satisfied, the video encoding apparatus encodes a first syntax element indicating whether differential encoding is applied to the target block or not. If the first syntax element indicates that differential encoding is applied and both of the two restrictions are satisfied, the second syntax element indicating the direction of differential encoding is encoded. However, if only one of the two restrictions is satisfied, the second syntax element is not encoded. This is because differential encoding is not allowed for a direction that the restriction is not satisfied, and is applicable only in a direction that the restriction is satisfied.

If one or more of the restriction on the width of the target block and the restriction on the height of the target block are satisfied, the video decoding apparatus extracts, from a bitstream, a first syntax element indicating whether differential encoding is applied to the target block or not. If the first syntax element indicates that differential encoding is applied and both of the two restrictions are satisfied, the second syntax element indicating the direction of differential encoding is extracted. However, if only one of the two restrictions is satisfied, the direction in which the restriction is satisfied is set as the direction of differential encoding, without extracting the second syntax element.

In some other embodiments, if one or more of the restriction on the width of the target block and the restriction on the height of the target block are not satisfied, block partitioning is performed so that the subblocks into which the target block is partitioned satisfy the restrictions on the width and height. For example, if the width of the target block is smaller than or equal to a horizontal threshold or the height of the target block is larger than a vertical threshold, the target block is partitioned in a horizontal direction such that the size restriction in the vertical direction is satisfied. For example, the target block may be partitioned in the horizontal direction so that the height of each subblock is equal to the vertical threshold. The video encoding apparatus and the video decoding apparatus encode the target block by sequentially applying a differential encoding technique for each of the subblocks. Alternatively, differential encoding for the subblocks may be performed in parallel.

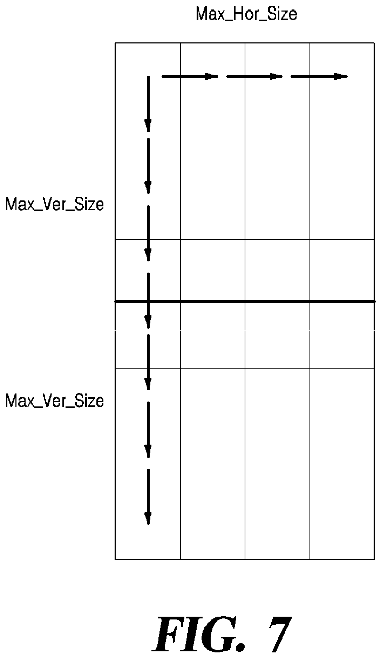

FIG. 7 is an exemplary view for explaining block partitioning which serves for satisfying a restriction on block size in differential encoding.

FIG. 7 shows a 4x8 block. If horizontal and vertical thresholds (Max_Hor_Size and Max_Ver_Size of FIG. 7) are set to 4, the 4x8 block satisfies the restriction on the horizontal direction but does not satisfy the restriction on the vertical direction. Accordingly, the 4x8 block is partitioned into two 4x4 blocks.

In an embodiment in which a differential encoding technique is sequentially applied for each subblock, the video encoding apparatus sequentially encodes the target block for each of 4x4 subblocks by using a differential encoding technique.

Firstly, the video encoding apparatus determines the direction of differential encoding for a first 4x4 block. Also, the video encoding apparatus generates a prediction block for the 4x4 block by using an intra prediction mode in the same direction as the determined differential encoding direction, and generates residual signals for the 4x4 block through subtraction between actual pixels in the 4x4 subblock and pixels in a prediction block. After quantizing the residual signals, the video encoding apparatus performs differential encoding in the determined direction for the quantized residual signals within the 4x4 subblock and entropy-encodes the differential-encoded residual signals. Also, the residual signals within the 4x4 subblock are reconstructed by inversely quantizing the quantized residual signals. The video encoding apparatus reconstructs the 4x4 subblock by adding the reconstructed residual signals in the 4x4 subblock and the prediction pixels in the prediction block.

Afterwards, the video encoding apparatus differentially encodes a second 4x4 subblock in the same way as the first 4x4 subblock. In this case, the direction of differential encoding thereof may be the same as or different from that of the first 4x4 subblock. In an embodiment in which the same direction of differential encoding is applied to all the subblocks within the target block, the second syntax element indicating the direction of differential encoding is encoded only once for the target block. Also, for intra-predicting the second 4x4 subblock, the reconstructed pixels in the first 4x4 subblock, which is adjacent to the second 4x4 subblock, may be used.

In an embodiment in which differential encoding for the subblocks is performed in parallel, two 4x4 subblocks are simultaneously processed in parallel. In this case, there may be a subblock of which neighboring pixels have not been reconstructed. For example, there is no reconstructed neighboring pixel on the top of a lower 4x4 subblock of FIG. 7. If the direction of differential encoding of the lower 4x4 subblock is a vertical direction, vertical intra prediction may not be applied. Accordingly, a subblock in which no reconstructed neighboring pixel exists is intra-predicted by using reconstructed neighboring pixels adjacent to the target block. In this embodiment, the subblocks may all have the same differential encoding direction or different differential encoding directions. When implementing the subblocks in such a way as to use the same differential encoding direction, the second syntax element for the differential encoding direction is signaled once for the target block. On the other hand, if the subblocks are implemented in such a way as to use different differential encoding directions, the second syntax element for the differential encoding direction may be encoded for each subblock. In this case, the intra prediction direction is the same as the differential encoding direction, so the subblocks may be predicted in different intra prediction modes.

In an alternative embodiment, the video encoding apparatus may intra-predict the entirety target block using the same direction as the differential encoding direction and thereby generate a residual block of the same size as the target block. The video encoding apparatus may quantize residual signals within the residual block and then perform differential encoding for each subblock. That is, in the present embodiment, prediction is performed on a per target block basis, while differential encoding of the residual signals within the residual block generated through prediction is performed on a per subblock basis. In this embodiment, the differential encoding direction is the same for all subblocks.

If one or more of the restriction on the width of the target block and the restriction on the height of the target block are not satisfied, the video decoding apparatus performs block partitioning for the target block such that the subblocks into which the target block is partitioned satisfies the restrictions on the width and height. The video decoding apparatus reconstructs the subblocks by using a differential decoding technique for each of the subblocks into which the target block is partitioned. The differential decoding technique was described with reference to Equation 3 and Equation 4, and the intra prediction technique is the same as the method performed by the video encoding apparatus, so further description of a decoding process performed by the video decoding apparatus will be omitted to avoid redundant explanation.

In the above, various methods have been described for controlling differential encoding at a high level and for controlling differential encoding at a block level if differential encoding is enabled at a high level. Differential encoding of a video sequence may be controlled through a combination of the control methods at the high level and the control methods at the block level. Hereinafter, one exemplary embodiment of the various combinations will be described.

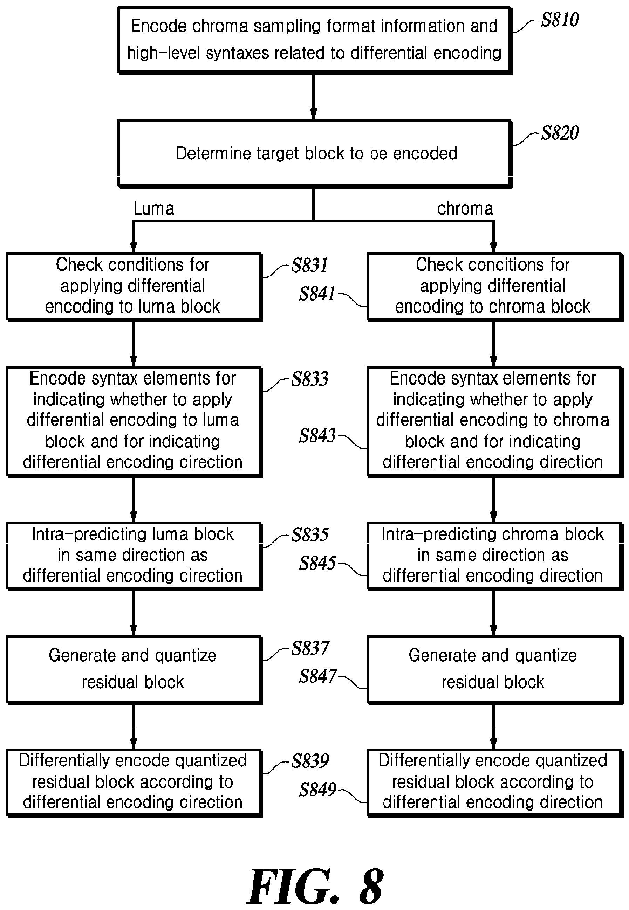

FIG. 8 is a flow chart for explaining a method for encoding a video sequence using a differential encoding technique according to an embodiment of the present disclosure.

The video encoding apparatus encodes, in an SPS, information on a chroma sampling format and high-level syntax elements related to differential encoding of residual signals (S810). Here, the high-level syntax elements include a single common control flag indicating whether differential encoding is enabled for the residual signals of each of luma and chroma components of a video sequence. That is, differential encoding is enabled or disabled for both of the luma component and the chroma component according to a value of the common control flag. Also, the high-level syntax elements include information on a maximum block size that enables differential encoding. Information on the maximum block size that enables differential encoding may be information on a maximum transform size (e.g., MaxTsSize) that enables transform skip or a block size (e.g., Max_Hor_Size, Max_Ver_Size) separately set for differential encoding control.

When a target block to be currently decoded is determined (S820), a prediction type of the target block is selected between inter prediction and intra prediction. In this embodiment, differential encoding is applied only to intra prediction. Accordingly, it is assumed that the prediction type of the target block is selected as intra prediction.

Once the target block to be currently decoded is determined, an encoding process for each of luma and chroma blocks corresponding to the target block is performed. In FIG. 8, S831 through S839 show a process in which a differential encoding technique is applied to the luma block, and S841 through S849 show a process in which a differential encoding technique is applied to the chroma block.

A description of the luma block will be given first. The video encoding apparatus checks conditions for applying differential encoding to the luma block (S831). Here, the condition for the luma block is defined by high-level syntax elements. As described above, differential encoding for the luma block is applicable when the following conditions are satisfied:

(1) The common control flag indicates that differential encoding is enabled for both of the luma and chroma components.
(2) The width of the target block corresponding to the luma block is smaller than or equal to a horizontal threshold defined by information on the maximum block size, and the height of the target block is smaller than or equal to a vertical threshold defined by information on the maximum block size.

Here, the horizontal threshold and the vertical threshold may be a maximum transform size MaxTsSize up to which transform skip is allowed.

When the above conditions are satisfied, the video encoding apparatus encodes a first syntax element indicating whether differential encoding is applied to the luma block. Also, when the first syntax element indicates that differential encoding is applied, the video encoding apparatus encodes a second syntax element indicating the direction of differential encoding of the luma block (S833).

If differential encoding is applied, the video encoding apparatus sets an intra prediction mode equal to the differential encoding direction indicated by the second syntax element, and generates a prediction block for the luma block by using the set intra prediction mode (S835). Also, a residual block for the luma block is generated by subtracting the prediction block from the luma block, and the residual block is quantized (S837). Since differential encoding is a tool applied in the transform skip mode, transform for the residual block is not performed.

The video encoding apparatus performs differential encoding of the residual signals within the quantized residual block according to the differential encoding direction indicated by the second syntax element (S839). Since differential encoding has been explained already with reference to Equations 1 and 2, further explanation will be omitted.

Meanwhile, the video encoding apparatus performs a process on the chroma block corresponding to the target block in a similar manner to the luma block. However, the conditions for applying differential encoding are different from those of the luma block. The conditions for applying differential encoding to the chroma block are defined based on chroma format information, as well as high-level syntax elements, which are as follows:

(1) The common control flag indicates that differential encoding is enabled for both the luma and chroma components of a video sequence.

(2) The valued obtained by dividing the width of the target block corresponding to the chroma block by a horizontal scaling factor determined by a chroma sampling format is smaller than or equal to a horizontal threshold indicated by information on the maximum block size.

(3) The value obtained by dividing the height of the target block by a vertical scaling factor determined by the chroma sampling format is smaller than or equal to a vertical threshold indicated by information on the maximum block size.

Once the above conditions are satisfied, the process performed in S843 through S849 is identical to the process performed in S833 through S839. Thus, further description will be omitted.

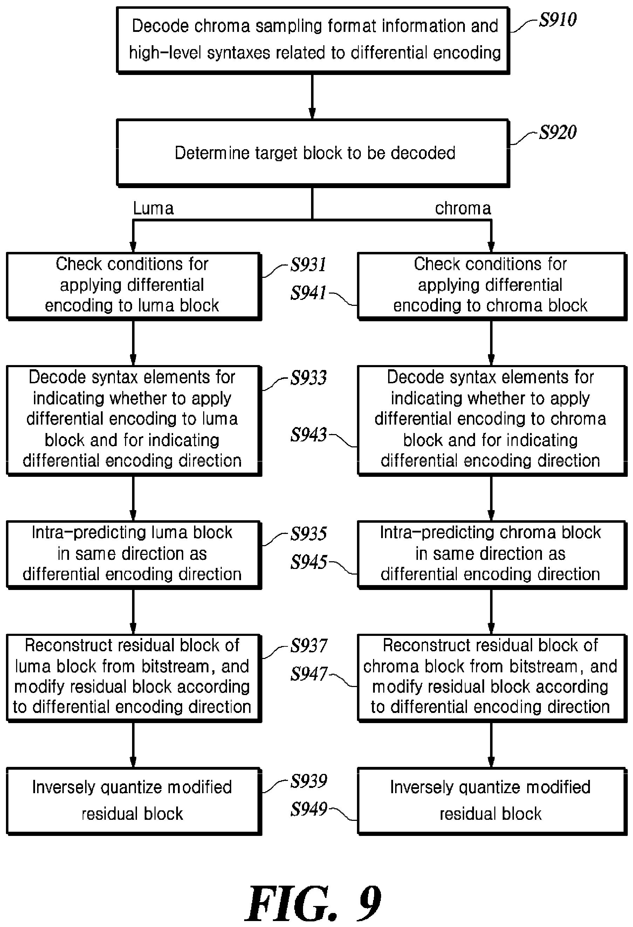

FIG. 9 is a flow chart for explaining a method for decoding a video sequence using a differential encoding technique according to an embodiment of the present disclosure. FIG. 9 shows a decoding method corresponding to the encoding method of FIG. 8.

The video decoding apparatus decodes information on a chroma sampling format and high-level syntax elements related to differential encoding of residual signals from an SPS in a bitstream received from the video encoding apparatus (S910).

When a target block to be currently decoded is determined (S920), a prediction type of the target block is selected between inter prediction and intra prediction. In this embodiment, differential encoding is applied only to intra prediction. Accordingly, it is assumed that the prediction type of the target block is selected as intra prediction.

Once the target block to be currently decoded is determined, a decoding process for each of luma and chroma blocks corresponding to the target block is performed. In FIG. 9, S931 through S939 show a decoding process for the luma block, and S941 through S949 show a decoding process for the chroma block.

A description of the luma block will be given first. The video decoding apparatus checks a condition for applying differential encoding to the luma block (S931). Here, the condition for the luma block is defined by high-level syntax elements, and is the same as the condition explained in S831 of FIG. 8.

When the condition is satisfied, the video decoding apparatus decodes, from the bitstream, a first syntax element indicating whether differential encoding is applied to the luma block. Also, when the first syntax element indicates that differential encoding is applied, the video decoding apparatus decodes a second syntax element indicating the direction of differential encoding of the luma block (S933).

If differential encoding is applied, the video decoding apparatus sets an intra prediction mode equal to the differential encoding direction indicated by the second syntax element, and generates a prediction block for the luma block by using the set intra prediction mode (S935). Accordingly, information on the intra prediction mode for the luma block is not decoded.

Then, the video decoding apparatus generates a residual block for the luma block by reconstructing residual signals for the luma block from the bitstream. Also, as explained previously, the residual signals in the residual block are modified with reference to Equations 3 and 4 (S937). The video decoding apparatus inversely quantizes the modified residual block (S939). Since differential encoding is applied in the transform skip mode, inverse transform is skipped after inverse quantization.

The video decoding apparatus adds the inversely quantized residual block to the prediction block generated through intra prediction, thereby reconstructing the luma block.

Meanwhile, the video decoding apparatus performs a decoding process for the chroma block corresponding to the target block. The decoding process for the chroma block is identical to a decoding process for the luma block. However, in S941, the condition for applying differential encoding to the chroma block is different from the condition for the luma block. The condition for applying differential encoding to the chroma block is identical to the condition explained in S841 of FIG. 8.

It should be understood that the above-described exemplary embodiments can be implemented in many different ways. The functions described in one or more examples may be implemented in hardware, software, firmware, or any combination of the above. The functional components described in this specification have been labeled as units in order to more particularly emphasize their implementation independence.

Meanwhile, various methods or functions described in the present disclosure may be implemented with instructions stored in a non-transitory recording medium which may be read and executed by one or more processors. The non-transitory recording medium includes, for example, all types of recording devices in which data is stored in a form readable by a computer system. For example, the non-transitory recording medium includes storage media such as an erasable and programmable read only memory (EPROM), an electrically erasable and programmable read-only memory (EEPROM), a flash drive, an optical drive, a magnetic hard drive, and a solid state drive (SSD).

Although exemplary embodiments have been described for illustrative purposes, those skilled in the art will appreciate that and various modifications and changes are possible, without departing from the idea and scope of the embodiments. Exemplary embodiments have been described for the sake of brevity and clarity. Accordingly, one of ordinary skill would understand that the scope of the embodiments is not limited by the embodiments explicitly described above but is inclusive of the claims.

**Claims**

1.    A method for decoding a bitstream generated by encoding a video sequence of a plurality of pictures, the method comprising:

decoding, from a sequence parameter set of the bitstream, information on a chroma sampling format and high-level syntax elements related to differential encoding of residual signals, the high-level syntax elements comprising a single common control flag indicating whether the differential encoding is enabled for the residual signals of each of luma and chroma components of the video sequence, and information on a maximum block size allowed for the differential encoding;

if a target block to be currently decoded satisfies conditions defined by the information on the chroma sampling format and the high-level syntax elements, decoding a first chroma syntax element indicating whether the differential encoding is applied to a chroma block corresponding to the target block or not, and decoding a second chroma syntax element indicating a differential encoding direction applied to the chroma block based on the first chroma syntax element;

reconstructing a residual block of the chroma block from the bitstream; and

reconstructing the chroma block by modifying the residual signals within the residual block according to the differential encoding direction indicated by the second chroma syntax element,

wherein:

the conditions defined by the information on the chroma sampling format and the high-level syntax elements are satisfied when:

the common control flag indicates that the differential encoding is enabled for both of the luma and chroma components of the video sequence,

the value obtained by dividing the width of the target block by a horizontal scaling factor determined by the chroma sampling format is smaller than or equal to a horizontal threshold indicated by the information on the maximum block size, and

the value obtained by dividing the height of the target block by a vertical scaling factor determined by the chroma sampling format is smaller than or equal to a vertical threshold indicated by the information on the maximum block size.

2.    The method of claim 1, wherein the reconstructing of the chroma block comprises:

generating a modified residual block by modifying a target residual signal to be modified within the residual block in such a manner that one or more residual signals within the residual block, which are arranged in a direction indicated by the second chroma syntax element from the target residual signal, are added to the target residual signal;

inversely quantizing the modified residual block and skipping inverse transform for the inversely quantized residual block;

generating a prediction block for the chroma block, by using an intra prediction mode having the same direction as the differential encoding direction indicated by the second syntax element without decoding intra prediction information for the chroma block; and

reconstructing the chroma block by adding the prediction block and the inversely quantized residual block.

3.    The method of claim 2, wherein, when the second chroma syntax element indicates a horizontal direction, the target residual signal is modified in such a manner that left residual signals positioned to the left of the target residual signal in the same row as the target residual signal is added to the target residual signal.

4. The method of claim 2, wherein, when the second chroma syntax element indicates a vertical direction, the target residual signal is modified in such a manner that upper residual signals positioned above the target residual signal in the same column as the target residual signal is added to the target residual signal.

5. The method of claim 1, wherein the information on the maximum block size allowed for the differential encoding is information on a maximum transform size up to which transform skip is allowed.

6. The method of claim 1, further comprising:

if the target block satisfies conditions defined by the high-level syntax elements, decoding a first luma syntax element indicating whether the differential encoding is applied to a luma block corresponding to the target block or not, and decoding a second luma syntax element indicating a differential encoding direction applied to the luma block based on the first
reconstructing a residual block of the luma block from the bitstream; and
reconstructing the luma block by modifying the residual signals within the residual block of the luma block according to the differential encoding direction indicated by the second luma syntax element.

7. The method of claim 6, wherein the conditions defined by the high-level syntax elements are satisfied when:

the common control flag indicates that the differential encoding is enabled for both of the luma and chroma components of the video sequence,
the width of the target block is smaller than or equal to a horizontal threshold indicated by the information on the maximum block size, and
the height of the target block is smaller than or equal to a vertical threshold indicated by the information on the maximum block size.

8. A method for encoding a video sequence of a plurality of pictures, the method comprising:

encoding, to a sequence parameter set of the bitstream, information on a chroma sampling format and high-level syntax elements related to differential encoding of residual signals, the high-level syntax elements comprising a single common control flag indicating whether the differential encoding is enabled for the residual signals of each of luma and chroma components of the video sequence, and information on a maximum block size allowed for the differential encoding;
if a target block to be currently decoded satisfies conditions defined by the information on the chroma sampling format and the high-level syntax elements, encoding a first chroma syntax element indicating whether the differential encoding is applied to a chroma block corresponding to the target block or not, and encoding a second chroma syntax element indicating a differential encoding direction applied to the chroma block based on the first chroma syntax element; and
if the first chroma syntax element indicates that the differential encoding is applied to the chroma block, differentially encoding the residual signals for the chroma block according to the differential encoding direction indicated by the second chroma syntax element,
wherein:
the conditions defined by the information on the chroma sampling format and the high-level syntax elements are satisfied when:

the common control flag indicates that the differential encoding is enabled for both of the luma and chroma components of the video sequence,
the value obtained by dividing the width of the target block by a horizontal scaling factor determined by the chroma sampling format is smaller than or equal to a horizontal threshold indicated by the information on the maximum block size, and
the value obtained by dividing the height of the target block by a vertical scaling factor determined by the chroma sampling format is smaller than or equal to a vertical threshold indicated by the information on the maximum block size.

9. The method of claim 8, wherein the differential encoding comprises:

generating a prediction block for the chroma block, by using an intra prediction mode having the same direction as the differential encoding direction indicated by the second syntax element;

generating a residual block for the chroma block by subtracting the prediction block from the chroma block;

skipping transform of the residual block and quantizing the residual block; and

encoding a differential value between adjacent residual signals arranged in the differential encoding direction indicated by the second syntax element within the quantized residual block,

wherein information on the intra prediction mode for the chroma block is not encoded.

10. The method of claim 8, wherein the information on the maximum block size allowed for the differential encoding is information on a maximum transform size up to which transform skip is allowed.

11. A non-transitory computer-readable recording medium storing instructions to execute the method of claim 8.

**Patentansprüche**

1. Verfahren zum Decodieren eines Bitstroms, der durch Codieren einer Videosequenz von mehreren Bildern generiert wird, wobei das Verfahren umfasst:

Decodieren, aus einem Sequenzparametersatz des Bitstroms, von Informationen über ein Chroma-Abtastformat und

übergeordnete Syntaxelemente, die sich auf ein differentielles Codieren von Restsignalen beziehen, wobei die übergeordneten Syntaxelemente ein einzelnes gemeinsames Steuerungs-Flag umfassen, das angibt, ob das differentielle Codieren für die Restsignale jeder von Luma- und Chroma-Komponenten der Videosequenz aktiviert ist, und

Informationen über eine maximale Blockgröße, die für das differentielle Codieren erlaubt ist;

falls ein momentan zu decodierender Zielblock Bedingungen erfüllt, die durch die Informationen über das Chroma-Abtastformat und die übergeordneten Syntaxelemente definiert sind, Decodieren eines ersten Chroma-Syntaxelements, das angibt, ob das differentielle Codieren auf einen Chroma-Block angewendet wird, der dem Zielblock entspricht, oder nicht, und Decodieren eines zweiten Chroma-Syntaxelements, das eine Richtung des differentiellen Codierens angibt, die auf den Chroma-Block auf der Grundlage des ersten Chroma-Syntaxelements angewendet wird;

Rekonstruieren eines Restblocks des Chroma-Blocks aus dem Bitstrom; und

Rekonstruieren des Chroma-Blocks durch Modifizieren der Restsignale innerhalb des Restblocks gemäß der durch das zweite Chroma-Syntaxelement angegebenen Richtung des differentiellen Codierens,

wobei:

die durch die Informationen über das Chroma-Abtastformat und die übergeordneten Syntaxelemente definierten Bedingungen erfüllt sind, wenn:

das gemeinsame Steuerungs-Flag angibt, dass das differentielle Codieren sowohl für die Luma- als auch für die Chroma-Komponenten der Videosequenz aktiviert ist,

der Wert, der durch Dividieren der Breite des Zielblocks durch einen durch das Chroma-Abtastformat bestimmten horizontalen Skalierungsfaktor erhalten wird, kleiner als oder gleich einer horizontalen Schwelle ist, die durch die Informationen über die maximale Blockgröße angegeben wird, und

der Wert, der durch Dividieren der Höhe des Zielblocks durch einen durch das Chroma-Abtastformat bestimmten vertikalen Skalierungsfaktor erhalten wird, kleiner als oder gleich einer vertikalen Schwelle ist, die durch die Informationen über die maximale Blockgröße angegeben wird.

2. Verfahren nach Anspruch 1, wobei das Rekonstruieren des Chroma-Blocks umfasst:

Generieren eines modifizierten Restblocks durch Modifizieren eines zu modifizierenden Ziel-Restsignals innerhalb des Restblocks in einer solchen Weise, dass ein oder mehrere Restsignale innerhalb des Restblocks, die in einer durch das zweite Chroma-Syntaxelement angegebenen Richtung ausgehend von dem Ziel-Restsignal angeordnet sind, zu dem Ziel-Restsignal addiert werden;

inverses Quantisieren des modifizierten Restblocks und Überspringen einer inversen Transformation für den invers quantisierten Restblock;

Generieren eines Vorhersageblocks für den Chroma-Block unter Verwendung eines Intra-Vorhersagemodus, der dieselbe Richtung hat wie die durch das zweite Syntaxelement angegebene Richtung des differentiellen Codierens, ohne Intra-Vorhersageinformationen für den Chroma-Block zu decodieren; und
Rekonstruieren des Chroma-Blocks durch Addieren des Vorhersageblocks und des invers quantisierten Restblocks.

3. Verfahren nach Anspruch 2, wobei, wenn das zweite Chroma-Syntaxelement eine horizontale Richtung angibt, das Ziel-Restsignal in einer solchen Weise modifiziert wird, dass linke Restsignale, die links von dem Ziel-Restsignal in derselben Reihe wie das Ziel-Restsignal positioniert sind, zu dem Ziel-Restsignal addiert werden.

4. Verfahren nach Anspruch 2, wobei, wenn das zweite Chroma-Syntaxelement eine vertikale Richtung angibt, das Ziel-Restsignal in einer solchen Weise modifiziert wird, dass obere Restsignale oberhalb des Ziel-Restsignals in derselben Spalte wie das Ziel-Restsignal positioniert sind, zu dem Ziel-Restsignal addiert werden.

5. Verfahren nach Anspruch 1, wobei die Informationen über die für das differentielle Codieren maximal zulässige Blockgröße Informationen über eine maximale Transformationsgröße sind, bis zu der ein Überspringen einer Transformation erlaubt ist.

6. Verfahren nach Anspruch 1, des Weiteren umfassend:

falls der Zielblock Bedingungen erfüllt, die durch die übergeordneten Syntaxelemente definiert sind, Decodieren eines ersten Luma-Syntaxelements, das angibt, ob das differentielle Codieren auf einen Luma-Block angewendet wird, der dem Zielblock entspricht, oder nicht, und Decodieren eines zweiten Luma-Syntaxelements, das eine Richtung des differentiellen Codierens angibt, die auf der Grundlage des ersten Luma-Syntaxelements auf den Luma-Block angewendet wird;
Rekonstruieren eines Restblocks des Luma-Blocks aus dem Bitstrom; und
Rekonstruieren des Luma-Blocks durch Modifizieren der Restsignale innerhalb des Restblocks des Luma-Blocks gemäß der durch das zweite Luma-Syntaxelement angegebenen Richtung des differentiellen Codierens.

7. Verfahren nach Anspruch 6, wobei die durch die übergeordneten Syntaxelemente definierten Bedingungen erfüllt sind, wenn:

das gemeinsame Steuerungs-Flag angibt, dass das differentielle Codieren sowohl für die Luma- als auch für die Chroma-Komponenten der Videosequenz aktiviert ist,
die Breite des Zielblocks kleiner als oder gleich einer horizontalen Schwelle ist, die durch die Informationen über die maximale Blockgröße angegeben wird, und
die Höhe des Zielblocks kleiner als oder gleich einer vertikalen Schwelle ist, die in den Informationen über die maximale Blockgröße angegeben ist.

8. Verfahren zum Codieren einer Videosequenz von mehreren Bildern, wobei das Verfahren umfasst:

Codieren, zu einem Sequenzparametersatz des Bitstroms, von Informationen über ein Chroma-Abtastformat und übergeordnete Syntaxelemente, die sich auf ein differentielles Codieren von Restsignalen beziehen, wobei die übergeordneten Syntaxelemente ein einzelnes gemeinsames Steuerungs-Flag umfassen, das angibt, ob das differentielle Codieren für die Restsignale jeder von Luma- und Chroma-Komponenten der Videosequenz aktiviert ist, und Informationen über eine maximale Blockgröße, die für das differentielle Codieren erlaubt ist;
falls ein momentan zu decodierender Zielblock Bedingungen erfüllt, die durch die Informationen über das Chroma-Abtastformat und die übergeordneten Syntaxelemente definiert sind, Codieren eines ersten Chroma-Syntaxelements, das angibt, ob das differentielle Codieren auf einen Chroma-Block angewendet wird, der dem Zielblock entspricht, oder nicht, und Codieren eines zweiten Chroma-Syntaxelements, das eine Richtung des differentiellen Codierens angibt, die auf den Chroma-Block auf der Grundlage des ersten Chroma-Syntaxelements angewendet wird; und
falls das erste Chroma-Syntaxelement angibt, dass das differentielle Codieren auf den Chroma-Block angewendet wird, differentielles Codieren der Restsignale für den Chroma-Block gemäß der durch das zweite Chroma-Syntaxelement angegebenen Richtung des differentiellen Codierens,
wobei:
die durch die Informationen über das Chroma-Abtastformat und die übergeordneten Syntaxelemente definierten Bedingungen erfüllt sind, wenn:

das gemeinsame Steuerungs-Flag angibt, dass das differentielle Codieren sowohl für die Luma- als auch für die Chroma-Komponenten der Videosequenz aktiviert ist,

der Wert, der durch Dividieren der Breite des Zielblocks durch einen durch das Chroma-Abtastformat bestimmten horizontalen Skalierungsfaktor erhalten wird, kleiner als oder gleich einer horizontalen Schwelle ist, die durch die Informationen über die maximale Blockgröße angegeben wird, und

der Wert, der durch Dividieren der Höhe des Zielblocks durch einen durch das Chroma-Abtastformat bestimmten vertikalen Skalierungsfaktor erhalten wird, kleiner als oder gleich einer vertikalen Schwelle ist, die durch die Informationen über die maximale Blockgröße angegeben wird.

**9.** Verfahren nach Anspruch 8, wobei das differentielle Codieren umfasst:

Generieren eines Vorhersageblocks für den Chroma-Block unter Verwendung eines Intra-Vorhersagemodus, der dieselbe Richtung hat wie die durch das zweite Syntaxelement angegebene Richtung des differentiellen Codierens; und

Generieren eines Restblocks für den Chroma-Block durch Subtrahieren des Vorhersageblocks von dem Chroma-Block;

Überspringen der Transformation des Restblocks und Quantisieren des Restblocks; und

Codieren eines Differenzwertes zwischen benachbarten Restsignalen, die in der durch das zweite Syntaxelement angegebenen Richtung des differentiellen Codierens innerhalb des quantisierten Restblocks angeordnet sind,

wobei Informationen über den Intra-Vorhersagemodus für den Chroma-Block nicht codiert werden.

**10.** Verfahren nach Anspruch 8, wobei die Informationen über die für das differentielle Codieren maximal zulässige Blockgröße Informationen über eine maximale Transformationsgröße sind, bis zu der ein Überspringen einer Transformation erlaubt ist.

**11.** Nicht-transitorisches, computerlesbares Aufzeichnungsmedium, das Instruktionen zum Ausführen des Verfahrens nach Anspruch 8 speichert.

## Revendications

**1.** Procédé de décodage d'un flux binaire généré en encodant une séquence vidéo d'une pluralité d'images, le procédé comprenant de :

décoder, à partir d'un ensemble de paramètres de séquence du flux binaire, des informations sur un format d'échantillonnage de la chrominance et des éléments de syntaxe de haut niveau associés à un codage différentiel de signaux résiduels, les éléments de syntaxe de haut niveau comprenant un fanion de contrôle commun unique indiquant si le codage différentiel est activé pour les signaux résiduels de chacune des composantes de luminance et de chrominance de la séquence vidéo, et des informations sur une taille de bloc maximale autorisée pour le codage différentiel ;

si un bloc cible actuellement à décoder satisfait à des conditions définies par les informations sur le format d'échantillonnage de la chrominance et les éléments de syntaxe de haut niveau, décoder un premier élément de syntaxe de la chrominance indiquant si le codage différentiel est appliqué ou non à un bloc de chrominance correspondant au bloc cible, et décoder un second élément de syntaxe de la chrominance indiquant une direction de codage différentiel appliquée au bloc de chrominance sur la base du premier élément de syntaxe de la chrominance ;

reconstruire un bloc résiduel du bloc de chrominance à partir du flux binaire ; et

reconstruire le bloc de chrominance en modifiant les signaux résiduels à l'intérieur du bloc résiduel en fonction de la direction de codage différentiel indiqué par le second élément de syntaxe de la chrominance,

dans lequel :

les conditions définies par les informations sur le format d'échantillonnage de la chrominance et les éléments de syntaxe de haut niveau sont satisfaites lorsque :

le fanion de contrôle commun indique que le codage différentiel est activé à la fois pour les composantes de luminance et les composantes de chrominance de la séquence vidéo,

la valeur obtenue en divisant la largeur du bloc cible par un facteur d'échelle horizontale déterminé par le format d'échantillonnage de la chrominance est inférieure ou égale à un seuil horizontal indiqué par les informations sur la taille de bloc maximale, et

la valeur obtenue en divisant la hauteur du bloc cible par un facteur d'échelle verticale déterminé par le format d'échantillonnage de la chrominance est inférieure ou égale à un seuil vertical indiqué par les informations sur la taille de bloc maximale.

2. Procédé selon la revendication 1, dans lequel la reconstruction du bloc de chrominance comprend de :

générer un bloc résiduel modifié en modifiant un signal résiduel cible à modifier à l'intérieur du bloc résiduel d'une telle manière qu'un ou plusieurs signaux résiduels à l'intérieur du bloc résiduel, qui sont disposés dans une direction indiquée par le second élément de syntaxe de la chrominance à partir du signal résiduel cible, sont ajoutés au signal résiduel cible ;
quantifier de manière inversée le bloc résiduel modifié et sauter la transformation inverse pour le bloc résiduel quantifié de manière inversée ;
générer un bloc de prédiction pour le bloc de chrominance, en utilisant un mode de prédiction intra ayant la même direction que la direction de codage différentiel indiquée par le second élément de syntaxe sans décoder d'informations de prédiction intra pour le bloc de chrominance ; et
reconstruire la bloc de chrominance en ajoutant le bloc de prédiction et le bloc résiduel quantifié de manière inversée.

3. Procédé selon la revendication 2, dans lequel, lorsque le second élément de syntaxe de la chrominance indique une direction horizontale, le signal résiduel cible est modifié d'une telle manière que des signaux résiduels à gauche positionnés à la gauche du signal résiduel cible dans la même rangée que le signal résiduel cible sont ajoutés au signal résiduel cible.

4. Procédé selon la revendication 2, dans lequel, lorsque le second élément de syntaxe de la chrominance indique une direction verticale, le signal résiduel cible est modifié d'une telle manière que des signaux résiduels supérieurs positionnés au-dessus du signal résiduel cible dans la même colonne que le signal résiduel cible sont ajoutés au signal résiduel cible.

5. Procédé selon la revendication 1, dans lequel les informations sur la taille de bloc maximale autorisée pour le codage différentiel sont des informations sur une taille de transformation maximale jusqu'à laquelle un saut de transformation est autorisé.

6. Procédé selon la revendication 1, comprenant en outre de :

si le bloc cible satisfait à des conditions définies par les éléments de syntaxe de haut niveau, décoder un premier élément de syntaxe de luminance indiquant si le codage différentiel est appliqué ou non à un bloc de luminance correspondant au bloc cible, et décoder un second élément de syntaxe de luminance indiquant une direction de codage différentiel appliquée au bloc de luminance sur la base du premier élément de syntaxe de luminance ;
reconstruire un bloc résiduel du bloc de luminance à partir du flux binaire ; et
reconstruire le bloc de luminance en modifiant les signaux résiduels à l'intérieur du bloc résiduel du bloc de luminance en fonction de la direction de codage différentiel indiquée par le second élément de syntaxe de luminance.

7. Procédé selon la revendication 6, dans lequel les conditions définies par les éléments de syntaxe de haut niveau sont satisfaites lorsque :

le fanion de contrôle commun indique que le codage différentiel est activé à la fois pour les composantes de luminance et les composantes de chrominance de la séquence vidéo,
la largeur du bloc cible est inférieure ou égale à un seuil horizontal indiqué par les informations sur la taille de bloc maximale, et
la hauteur du bloc cible est inférieure ou égale à un seuil vertical indiqué par les informations sur la taille de bloc maximale.

8. Procédé d'encodage d'une séquence vidéo d'une pluralité d'images, le procédé comprenant de :

encoder, dans un ensemble de paramètres de séquence du flux binaire, des informations sur un format d'échantillonnage de la chrominance et des éléments de syntaxe de haut niveau associés à un codage différentiel de signaux résiduels, les éléments de syntaxe de haut niveau comprenant un fanion de contrôle commun unique indiquant si le codage différentiel est activé pour les signaux résiduels de chacune des composantes de luminance et de chrominance de la séquence vidéo, et des informations sur une taille de bloc maximale autorisée pour le codage différentiel ;

si un bloc cible actuellement à décoder satisfait à des conditions définies par les informations sur le format d'échantillonnage de la chrominance et les éléments de syntaxe de haut niveau, encoder un premier élément de syntaxe de la chrominance indiquant si le codage différentiel est appliqué ou non à un bloc de chrominance correspondant au bloc cible, et encoder un second élément de syntaxe de la chrominance indiquant une direction de codage différentiel appliquée au bloc de chrominance sur la base du premier élément de syntaxe de la chrominance ; et,

si le premier élément de syntaxe de la chrominance indique que le codage différentiel est appliqué au bloc de chrominance, encoder de manière différentielle les signaux résiduels pour le bloc de chrominance en fonction de la direction de codage différentiel indiquée par le second élément de syntaxe de la chrominance,

dans lequel :

les conditions définies par les informations sur le format d'échantillonnage de la chrominance et les éléments de syntaxe de haut niveau sont satisfaites lorsque :

le fanion de contrôle commun indique que le codage différentiel est activé à la fois pour les composantes de luminance et les composantes de chrominance de la séquence vidéo,

la valeur obtenue en divisant la largeur du bloc cible par un facteur d'échelle horizontale déterminé par le format d'échantillonnage de la chrominance est inférieure ou égale à un seuil horizontal indiqué par les informations sur la taille de bloc maximale, et

la valeur obtenue en divisant la hauteur du bloc cible par un facteur d'échelle verticale déterminé par le format d'échantillonnage de la chrominance est inférieure ou égale à un seuil vertical indiqué par les informations sur la taille de bloc maximale.

9. Procédé selon la revendication 8, dans lequel le codage différentiel comprend de :

générer un bloc de prédiction pour le bloc de chrominance, en utilisant un mode de prédiction intra ayant la même direction que la direction de codage différentiel indiquée par le second élément de syntaxe ;

générer un bloc résiduel pour le bloc de chrominance en soustrayant le bloc de prédiction du bloc de chrominance ;

sauter une transformation du bloc résiduel et quantifier le bloc résiduel ; et

encoder une valeur différentielle entre des signaux résiduels adjacents disposés dans la direction de codage différentiel indiquée par le second élément de syntaxe à l'intérieur du bloc résiduel quantifié,

dans lequel les informations sur le mode de prédiction intra pour le bloc de chrominance ne sont pas encodées.

10. Procédé selon la revendication 8, dans lequel les informations sur la taille de bloc maximale autorisée pour le codage différentiel sont des informations sur une taille de transformation maximale jusqu'à laquelle un saut de transformation est autorisé.

11. Support d'enregistrement non transitoire lisible par ordinateur stockant des instructions d'exécution du procédé selon la revendication 8.

**FIG. 1**

# FIG. 2

**FIG. 3**

*410* *415* *420* *430* *450*

Bitstream → Entropy decoder → Rearrangement unit → Inverse quantizer → Inverse transformer → + → Reconstructed video

*440* *444*

Inter-predictor

Intra-predictor

*442*

*470* *460* *466* *464* *462*

Memory ← ALF ← SAO ← Deblocking filter

# FIG. 4

(A)

(B)

# FIG. 5

FIG. 6

FIG. 7

Encode chroma sampling format information and
high-level syntaxes related to differential encoding — S810

↓

Determine target block to be encoded — S820

Luma ——————— chroma

| | |
|---|---|
| Check conditions for applying differential encoding to luma block — S831 | S841 — Check conditions for applying differential encoding to chroma block |
| ↓ | ↓ |
| Encode syntax elements for indicating whether to apply differential encoding to luma block and for indicating differential encoding direction — S833 | S843 — Encode syntax elements for indicating whether to apply differential encoding to chroma block and for indicating differential encoding direction |
| ↓ | ↓ |
| Intra-predicting luma block in same direction as differential encoding direction — S835 | S845 — Intra-predicting chroma block in same direction as differential encoding direction |
| ↓ | ↓ |
| Generate and quantize residual block — S837 | S847 — Generate and quantize residual block |
| ↓ | ↓ |
| Differentially encode quantized residual block according to differential encoding direction — S839 | S849 — Differentially encode quantized residual block according to differential encoding direction |

# FIG. 8

```
┌─────────────────────────────────────────────┐
│ Decode chroma sampling format information and │  ─S910
│ high-level syntaxes related to differential encoding │
└─────────────────────────────────────────────┘
                      │
                      ▼
┌─────────────────────────────────────────────┐
│       Determine target block to be decoded    │  ─S920
└─────────────────────────────────────────────┘
        Luma                          chroma
          │                              │
          ▼                              ▼
┌──────────────────────┐        ┌──────────────────────┐
│   Check conditions for │ ─S931  │   Check conditions for │
│   applying differential │ S941─ │   applying differential │
│  encoding to luma block │        │ encoding to chroma block │
└──────────────────────┘        └──────────────────────┘
          │                              │
          ▼                              ▼
┌──────────────────────┐        ┌──────────────────────┐
│ Decode syntax elements for │ ─S933 │ Decode syntax elements for │
│ indicating whether to apply │       │ indicating whether to apply │
│ differential encoding to luma │ S943─ │ differential encoding to chroma │
│  block and for indicating  │       │  block and for indicating  │
│ differential encoding direction │    │ differential encoding direction │
└──────────────────────┘        └──────────────────────┘
          │                              │
          ▼                              ▼
┌──────────────────────┐        ┌──────────────────────┐
│  Intra-predicting luma block │ ─S935 │ Intra-predicting chroma block │
│     in same direction as    │ S945─ │     in same direction as    │
│ differential encoding direction │    │ differential encoding direction │
└──────────────────────┘        └──────────────────────┘
          │                              │
          ▼                              ▼
┌──────────────────────┐        ┌──────────────────────┐
│ Reconstruct residual block of │ ─S937 │ Reconstruct residual block of │
│ luma block from bitstream, and │ S947─ │ chroma block from bitstream, and │
│ modify residual block according │    │ modify residual block according │
│ to differential encoding direction │  │ to differential encoding direction │
└──────────────────────┘        └──────────────────────┘
          │                              │
          ▼                              ▼
┌──────────────────────┐        ┌──────────────────────┐
│  Inversely quantize modified │ ─S939 │  Inversely quantize modified │
│       residual block        │ S949─ │       residual block        │
└──────────────────────┘        └──────────────────────┘
```

## FIG. 9

## REFERENCES CITED IN THE DESCRIPTION

**Non-patent literature cited in the description**

- **HENRY et al.** *CE8-related: BDPCM for chroma*

- **YOO S. et al.** *CE8-related: Unified condition between BDPCM and transform skip*